# EUROPÄISCHE PATENTSCHRIFT

(11) **EP 2 456 841 B1**
(45) Veröffentlichungstag und Bekanntmachung des Hinweises auf die Patenterteilung: **04.03.2015**
(21) Anmeldenummer: 10729810.1
(22) Anmeldetag: 29.06.2010
(51) Int. Cl.: C09K 19/44, C09K 19/12, C09K 19/16, C09K 19/18, C09K 19/04

(54) **FLÜSSIGKRISTALLINES MEDIUM UND DIESES ENTHALTENDE HOCHFREQUENZBAUTEILE**
LIQUID CRYSTAL MEDIUM AND HIGH-FREQUENCY COMPONENTS CONTAINING THE SAME
MILIEU CRISTALLIN LIQUIDE ET COMPOSANTS HAUTE FRÉQUENCE CONTENANT LEDIT MILIEU

(30) Priorität: 21.07.2009 DE 102009034301
(43) Veröffentlichungstag der Anmeldung: 30.05.2012
(73) Patentinhaber: Merck Patent GmbH, 64293 Darmstadt (DE)
(72) Erfinder: MANABE, Atsutaka, 64625 Bensheim (DE); GOEBEL, Mark, 64293 Darmstadt (DE); MONTENEGRO, Elvira, 69469 Weinheim (DE)
(86) Internationale Anmeldenummer: PCT/EP2010/003933
(87) Internationale Veröffentlichungsnummer: WO 2011/009524

(56) Entgegenhaltungen:
- EP-A1- 1 002 848
- EP-A1- 1 213 339
- EP-A1- 2 075 601
- EP-A2- 1 126 006
- WO-A1-2005/123879
- WO-A1-2009/115226
- DE-A1-102004 029 429
- DE-A1-102008 024 866
- JP-A- 2005 120 208
- US-A1- 2004 006 235
- US-B1- 6 790 488
- US-B2- 7 211 302

## Beschreibung

### Gebiet der Erfindung

Die vorliegende Erfindung betrifft flüssigkristalline Medien und diese Medien enthaltende Hochfrequenzbauteile, speziell Mikrowellenbauteile für Hochfrequenzvorrichtungen, wie Vorrichtungen zur Phasenschiebung von Mikrowellen, insbesondere für "microwave phased-array antennas".

### Stand der Technik und zu lösendes Problem

Flüssigkristalline Medien werden seit längerem in elektrooptischen Anzeigen (Liquid Crystal Displays - LCDs) genutzt, um Informationen anzuzeigen.

USP 7,183,447 offenbart verschiedene lateral fluorierte, mesogene Quaterphenylverbindungen.

USP 7,211,302 offenbart, unter anderem, flüssigkristalline Medien die neben polaren Terphenylverbindungen der Formeln 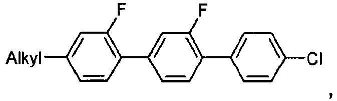 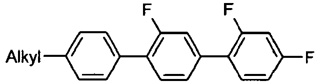 und 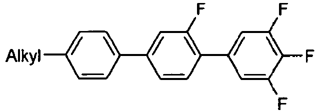 zur Verbesserung der Stabilität der Medien insbesondere gegen UV-Bestrahlung auch geringe Mengen an Quaterphenylverbindungen der Formel 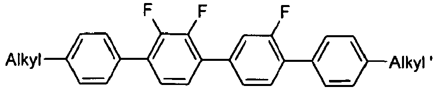 enthält.

In neuerer Zeit werden flüssigkristalline Medien jedoch auch für die Verwendung in Komponenten, bzw. in Bauteilen, für die Mikrowellentechnik vorgeschlagen, wie z.B. in DE 10 2004 029 429 A und in JP 2005-120208 (A).

Als typische Mikowellenanwendung wird das Konzept der invertierten Mikrostreifenleitung nach K.C. Gupta, R. Garg, I. Bahl und P. Bhartia: Microstrip Lines and Slotlines, 2nd ed., Artech House, Boston, 1996 wird z.B. in D. Dolfi, M. Labeyrie, P. Joffre und J.P. Huignard: Liquid Crystal Microwave Phase Shifter. Electronics Letters, Vol. 29, No. 10, S. 926-928, Mai 1993, N. Martin, N. Tentillier, P. Laurent, B. Splingart, F. Huert, PH. Gelin, C. Legrand: Electrically Microwave Tunable Components Using Liquid Crystals. 32nd European Microwave Conference, S. 393-396, Milan 2002 bzw. in Weil, C.: Passiv steuerbare Mikrowellenphasenschieber auf der Basis nichtlinearer Dielektrika. Darmstädter Dissertationen D17, 2002, C.Weil, G. Lüssem, and R. Jakoby: Tunable Invert-Microstrip Phase Shifter Device Using Nematic Liquid Crystals, IEEE MTT-S Int. Microw. Symp., Seattle, Washington, June 2002, pp. 367-370 zusammen mit dem kommerziellen Flüssigkristall K15 der Fa. Merck KGaA eingesetzt. C.Weil, G. Lüssem, and R. Jakoby: Tunable Invert-Microstrip Phase Shifter Device Using Nematic Liquid Crystals, IEEE MTT-S Int. Microw. Symp., Seattle, Washington, June 2002, pp. 367-370 erreicht damit Phasenschiebergüten von 12°/dB bei 10 GHz mit ca. 40 V Steuerspannung. Die Einfügeverluste des LCs, d.h. die Verluste, welche nur durch die Polarisationsverluste im Flüssigkristall bedingt sind, werden in Weil, C.: Passiv steuerbare Mikrowellenphasenschieber auf der Basis nichtlinearer Dielektrika. Darmstädter Dissertationen D17, 2002 mit näherungsweise 1 bis 2 dB bei 10 GHz angegeben. Außerdem wurde ermittelt, dass die Phasenschieberverluste primär durch die dielektrischen LC-Verluste und die Verluste an den dort verwendeten Wellenleiterübergängen bestimmt sind. T. Kuki, H. Fujikake, H. Kamoda und T. Nomoto: Microwave Variable Delay Line Using a Membrane Impregnated with Liquid Crystal. IEEE MTT-S Int. Microwave Symp. Dig. 2002, S. 363-366, Juni 2002 und T. Kuki, H. Fujikake, T. Nomoto: Microwave Variable Delay Line Using Dual-Frequency Switching-Mode Liquid Crystal. IEEE Trans. Microwave Theory Tech., Vol. 50, No. 11, S. 2604-2609, November 2002 sprechen auch die Verwendung von polymerisierten LC-Folien und "Dual-Frequency Switching-Mode"-Flüssigkristallen in Verbindung mit planaren Phasenschieberanordnungen an.

A. Penirschke, S. Müller, P. Scheele, C. Weil, M. Wittek, C. Hock und R. Jakoby: "Cavity Perturbation Method for Characterization of Liquid Crystals up to 35GHz", 34th European Microwave Confeence - Amsterdam, S. 545-548 beschreibt unter anderen die Eigenschaften der bekannten, flüssigkristallinen Einzelsubstanz K15 (Merck KGaA, Deutschland) bei einer Frequenz von 9 GHz.

A. Gaebler, F. Goelden, S. Müller, A. Penirschke und R. Jakoby "Direct Simulation of Material Permittivites using an Eigen-Susceptibility Formulation of the Vector Variational Approach", 12MTC 2009-International Instrumentation and Measurement Technology Conference, Singapur, 2009 (IEEE), S. 463-467 beschreibt die entsprechenden Eigenschaften der bekannten Flüssigkristallmischung E7 (ebenfalls Merck KGaA, Deutschland).

DE 10 2008 024866 A1, US 6,790,488 B1, EP 1 002 848 A1, EP 1 126 006 A2, EP 1 213 339 A1, WO 2009/115226 A1 und WO 2005/123879 A1 offenbaren Flüssigkristallmedien für elektrooptische Anzeigen.

EP 2 075 601 A1 beschreibt Kompensationsfolien für Flüssigkristallanzeigen.

DE 10 2004 029 429 A beschreibt die Anwendung von Flüssigkristallmedien in der Mikrowellentechnik unter anderem in Phasenschiebern. In DE 10 2004 029 429 A werden bereits flüssigkristalline Medien bezüglich ihrer Eigenschaften im entsprechenden Frequenzbereich untersucht. Außerdem werden dort flüssigkristalline Medien, die Verbindungen der Formeln 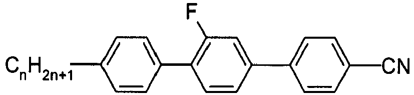 neben Verbindungen der Formeln 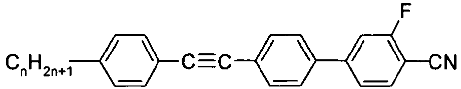 und 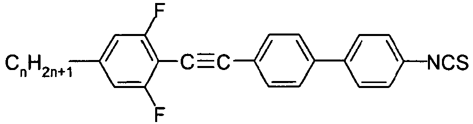 bzw. neben Verbindungen der Formeln 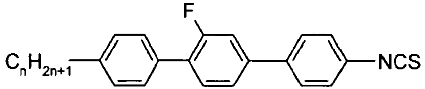 und 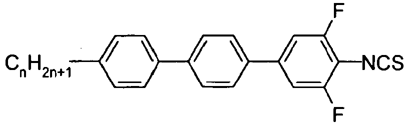 enthält.

Diese Zusammensetzungen sind jedoch mit gravierenden Nachteilen behaftet. Die meisten von ihnen führen, neben anderen Mängeln, zu unvorteilhaft hohen Verlusten und/oder unzureichenden Phasenverschiebungen bzw. zu geringer Materialgüte.

Für diese Anwendungen werden flüssigkristalline Medien mit besonderen, bislang eher ungewöhnlichen, ungebräuchlichen Eigenschaften, bzw. Kombinationen von Eigenschaften benötigt.

Somit sind neue flüssigkristalline Medien mit verbesserten Eigenschaften erforderlich. Insbesondere müssen der Verlust im Mikrowellenbereich verringert und die Materialgüte (η) verbessert werden.

Außerdem besteht der Bedarf das Tieftemperaturverhalten der Bauteile zu verbessern. Hier sind sowohl eine Verbesserung der Betriebseigenschaften, wie auch der Lagerfähigkeit nötig.

Es besteht daher ein erheblicher Bedarf an flüssigkristallinen Medien mit geeigneten Eigenschaften für entsprechende praktische Anwendungen.

### Vorliegende Erfindung

Überraschenderweise wurde nun gefunden, dass flüssigkristalline Medien mit einem geeignet hohen Δε, einem geeigneten, nematischen Phasenbereich und Δn verwirklicht werden können, welche die Nachteile der Materialien des Standes der Technik nicht oder zumindest nur in erheblich geringerem Maße aufweisen.

Diese verbesserten flüssigkristallinen Medien gemäß der vorliegenden Erfindung enthalten
- mindestens eine Verbindung der Formel I und
- mindestens eine Verbindung der Formel II
oder
- mindestens eine Verbindung der Formel I und
- mindestens eine Verbindung der Formel III
oder
- mindestens eine Verbindung der Formel II und
- mindestens eine Verbindung der Formel III
oder
- mindestens eine Verbindung der Formel I und
- mindestens eine Verbindung der Formel II und
- mindestens eine Verbindung der Formel III 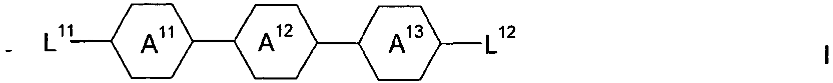
worin
- L¹¹: R¹¹ oder X¹¹,
- L¹²: R¹² oder X¹²,
- R¹¹ und R¹²: unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy oder unfluoriertes Alkoxyalkyl mit 2 bis 15, bevorzugt 3 bis 10, C-Atomen, vorzugsweise Alkyl oder unfluoriertes Alkenyl bedeuten,
- X¹¹ und X¹²: unabhängig voneinander H, F, Cl, -CN, -NCS, -SF₅, fluoriertes Alkyl oder fluoriertes Alkoxy mit 1 bis 7 C-Atomen oder fluoriertes Alkenyl, unfluoriertes oder fluoriertes Alkenyloxy oder unfluoriertes oder fluoriertes Alkoxyalkyl mit 2 bis 7 C-Atomen, vorzugsweise fluoriertes Alkoxy, fluoriertes Alkenyloxy, F oder Cl bedeuten, und 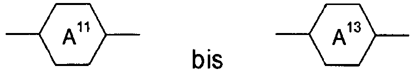 unabhängig voneinander 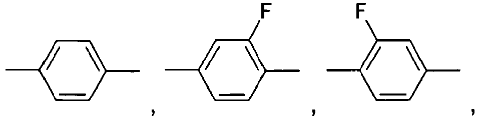 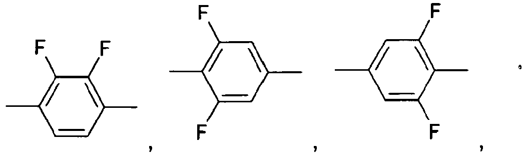 oder 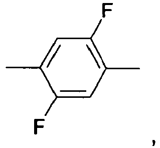 vorzugsweise 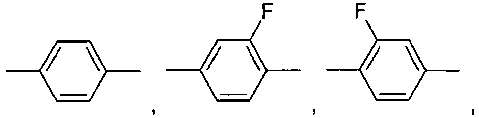 oder 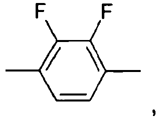 bedeuten 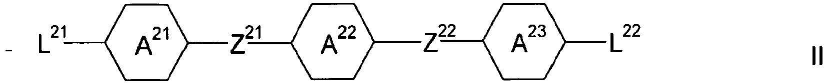
worin
- L²¹: R²¹ und, im Fall dass Z²¹ und/oder Z²² *trans-* -CH=CH- oder *trans-* -CF=CF-, bedeutet, alternativ X²¹, bedeutet,
- L²²: R²² und, im Fall, dass Z²¹ und/oder Z²² *trans-* -CH=CH- oder *trans-* -CF=CF-, bedeutet, alternativ X²², bedeutet,
- R²¹ und R²²: unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl, bedeuten,
- X²¹ und X²²: unabhängig voneinander F oder Cl, -CN, -NCS, -SF₅, fluoriertes Alkyl oder Alkoxy mit 1 bis 7 C-Atomen oder fluoriertes Alkenyl, Alkenyloxy oder Alkoxyalkyl mit 2 bis 7 C-Atomen, oder -NCS, vorzugsweise -NCS, bedeuten,
einer von
- Z²¹ und Z²²: *trans-* -CH=CH-, *trans-* -CF=CF- oder -C≡C- bedeutet und der andere unabhängig davon *trans-* -CH=CH-, *trans-* -CF=CF- oder eine Einfachbindung bedeutet, vorzugsweise einer von ihnen -C=C- oder *trans-*-CH=CH- und der andere eine Einfachbindung bedeutet, und 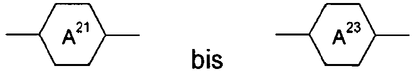 unabhängig voneinander 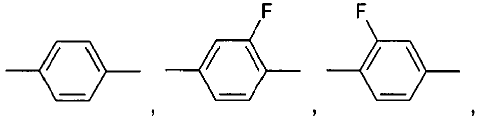 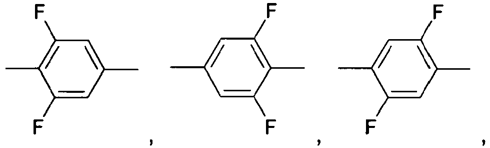 oder 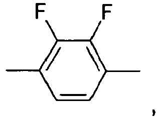 vorzugsweise 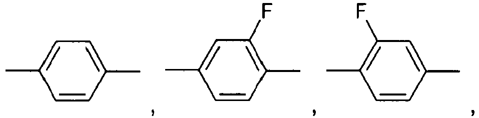 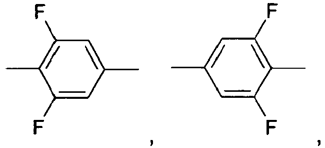 oder 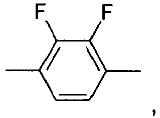 bedeuten 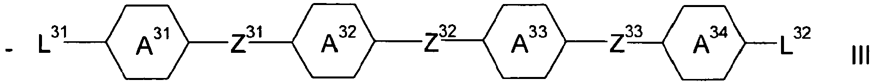
worin
- L³¹: R³¹ oder X³¹,
- L³²: R³² oder X³²,
- R³¹ und R³²: unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy oder unfluoriertes Alkoxyalkyl mit 2 bis 15, bevorzugt 3 bis 10, C-Atomen, vorzugsweise Alkyl oder unfluoriertes Alkenyl bedeuten,
- X³¹ und X³²: unabhängig voneinander H, F, Cl, -CN, -NCS, -SF₅, fluoriertes Alkyl oder fluoriertes Alkoxy mit 1 bis 7 C-Atomen oder fluoriertes Alkenyl, unfluoriertes oder fluoriertes Alkenyloxy oder unfluoriertes oder fluoriertes Alkoxyalkyl mit 2 bis 7 C-Atomen, vorzugsweise fluoriertes Alkoxy, fluoriertes Alkenyloxy, F oder Cl bedeuten, und
- Z³¹ bis Z³³: unabhängig voneinander *trans-* -CH=CH-, *trans-*-CF=CF-, -C=C- oder eine Einfachbindung bedeuten, vorzugsweise eines oder mehrere von ihnen eine Einfachbindung bedeutet, besonders bevorzugt alle eine Einfachbindung bedeuten und 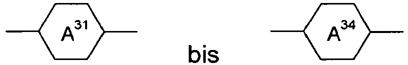 unabhängig voneinander 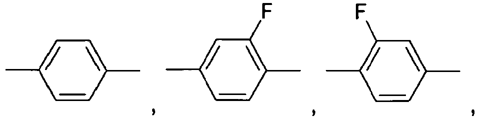 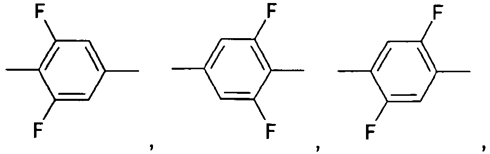 oder 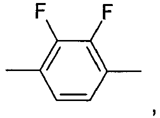 vorzugsweise 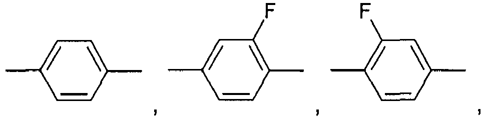 oder 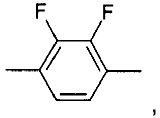 bedeuten,
wobei die Medien 60 % oder mehr der angegebenen Verbindungen enthalten.

In einer bevorzugten Ausführungsform der vorliegenden Erfindung enthalten die flüssigkristallinen Medien eine oder mehrere Verbindungen der Formel I und eine oder mehrere Verbindungen der Formel III.

In einer weiteren bevorzugten Ausführungsform der vorliegenden Erfindung enthalten die flüssigkristallinen Medien eine oder mehrere Verbindungen der Formel I und eine oder mehrere Verbindungen der Formel II.

Ebenfalls bevorzugt enthalten die flüssigkristallinen Medien gemäß der vorliegenden Erfindung enthalten eine oder mehrere Verbindungen der Formel II und eine oder mehrere Verbindungen der Formel III.

Besonders bevorzugt nach der vorliegenden Erfindung sind flüssigkristalline Medien, die eine oder mehrere Verbindungen der Formel I, eine oder mehrere Verbindungen der Formel II und eine oder mehrere Verbindungen der Formel III enthalten.

Bevorzugt enthalten die flüssigkristallinen Medien gemäß der vorliegenden Anmeldung insgesamt 15 bis 90 %, bevorzugt 20 bis 85 % und besonders bevorzugt 25 bis 80 %, an Verbindungen der Formel I.

Bevorzugt enthalten die flüssigkristallinen Medien gemäß der vorliegenden Anmeldung insgesamt 1 bis 70 %, bevorzugt 2 bis 65 % und besonders bevorzugt 3 bis 60 %, an Verbindungen der Formel II.

Bevorzugt enthalten die flüssigkristallinen Medien gemäß der vorliegenden Anmeldung insgesamt 0 bis 60 %, bevorzugt 5 bis 55 % und besonders bevorzugt 10 bis 50 %, an Verbindungen der Formel III.

In einer bevorzugten Ausführungsform der vorliegenden Erfindung, in der die flüssigkristallinen Medien jeweils eine oder mehrere Verbindungen der Formeln I, II und III enthalten, beträgt die Konzentration der Verbindungen der Formel I bevorzugt 45 bis 75 %, bevorzugt 50 bis 70 % und besonders bevorzugt 55 bis 65 %, die Konzentration der Verbindungen der Formel II bevorzugt 1 bis 20 %, bevorzugt 2 bis 15 % und besonders bevorzugt 3 bis 10 % und die Konzentration der Verbindungen der Formel III bevorzugt 1 bis 30 %, bevorzugt 5 bis 25 % und besonders bevorzugt 5 bis 20 %.

In einer weiteren bevorzugten Ausführungsform der vorliegenden Erfindung, in der die flüssigkristallinen Medien jeweils eine oder mehrere Verbindungen der Formeln I, II und III enthalten, beträgt die Konzentration der Verbindungen der Formel I bevorzugt 15 bis 40 %, bevorzugt 20 bis 35 % und besonders bevorzugt 25 bis 30 %, die Konzentration der Verbindungen der Formel II bevorzugt 10 bis 35 %, bevorzugt 15 bis 30 % und besonders bevorzugt 20 bis 25 % und die Konzentration der Verbindungen der Formel III bevorzugt 25 bis 50 %, bevorzugt 30 bis 45 % und besonders bevorzugt 35 bis 40 %.

In einer bevorzugten Ausführungsform der vorliegenden Erfindung, in der die flüssigkristallinen Medien jeweils eine oder mehrere Verbindungen der Formeln I und II, jedoch höchstens 5 %, und bevorzugt keine Verbindungen der Formel III enthalten, beträgt die Konzentration der Verbindungen der Formel I bevorzugt 10 bis 50 %, bevorzugt 20 bis 40 % und besonders bevorzugt 25 bis 35 %, die Konzentration der Verbindungen der Formel II bevorzugt 40 bis 70 %, bevorzugt 50 bis 65 % und besonders bevorzugt 55 bis 60 % und die Konzentration der Verbindungen der Formel III bevorzugt 1 bis 4 %, bevorzugt 1 bis 3 % und besonders bevorzugt 0 %.

Besonders bevorzugt enthalten die flüssigkristallinen Medien gemäß der vorliegenden Anmeldung insgesamt 50 bis 80 %, bevorzugt 55 bis 75 % und besonders bevorzugt 57 bis 70 %, an Verbindungen der Formel I-1 und/oder insgesamt 5 bis 70 %, bevorzugt 6 bis 50 % und besonders bevorzugt 8 bis 20 % an Verbindungen ausgewählt aus der Gruppe der Verbindungen der Formeln I-2 und I-3.
Ebenfalls bevorzugt enthalten die flüssigkristallinen Medien gemäß der vorliegenden Anmeldung insgesamt 5 bis 60 %, bevorzugt 10 bis 50 % und besonders bevorzugt 7 bis 20 % an Verbindungen der Formel II.

Im Fall der Verwendung einer einzelnen Homologen Verbindung, entsprechen diese Grenzen der Konzentration dieses Homologen, die bevorzugt 2 bis 20 %, besonders bevorzugt 1 bis 15 % beträgt. Im Fall der Verwendung von zwei oder mehr Homologen beträgt die Konzentration der einzelnen Homologen ebenfalls bevorzugt jeweils 1 bis 15 %.

Die Verbindungen der Formeln I bis III umfassen jeweils dielektrisch positive Verbindungen mit einer dielektrischen Anisotropie von mehr als 3, dielektrisch neutrale Verbindungen mit einer dielektrischen Anisotropie von weniger als 3 und mehr als -1,5 und dielektrisch negative Verbindungen mit einer dielektrischen Anisotropie von -1,5 und weniger.

In einer bevorzugten Ausführungsform der vorliegenden Erfindung enthält das Flüssigkristallmedium eine oder mehrere Verbindungen der Formel I, bevorzugt ausgewählt aus der Gruppe der Verbindungen der Formeln I-1 bis I-3, bevorzugt der Formeln I-1 und/oder I-2 und/oder I-3, bevorzugt der Formeln I-1 und I-2, stärker bevorzugt bestehen diese Verbindungen der Formel I überwiegend, noch stärker bevorzugt bestehen sie im Wesentlichen und ganz besonders bevorzugt bestehen sie vollständig daraus: 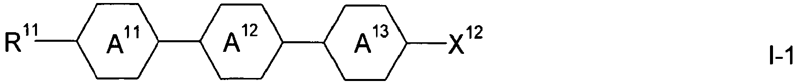 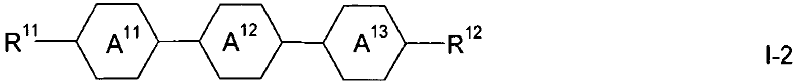 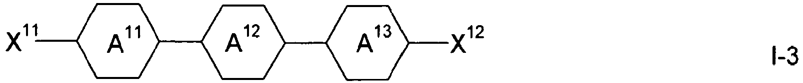 worin die Parameter die jeweiligen oben bei Formel I angegebenen Bedeutungen haben und bevorzugt
- R¹¹: unfluoriertes Alkyl mit 1 bis 7 C-Atomen oder unfluoriertes Alkenyl mit 2 bis 7 C-Atomen,
- R¹²: unfluoriertes Alkyl mit 1 bis 7 C-Atomen oder unfluoriertes Alkenyl mit 2 bis 7 C-Atomen, oder unfluoriertes Alkoxy mit 1 bis 7 C-Atomen,
- X¹¹ und X¹²: unabhängig voneinander F, Cl, -OCF₃, -CF₃, -CN, -NCS oder -SF₅, bevorzugt F, Cl, -OCF₃, oder -CN, bedeuten.

Bevorzugt werden die Verbindungen der Formeln I-1 ausgewählt aus der Gruppe der Verbindungen der Formeln I-1a bis I-1d, stärker bevorzugt bestehen diese Verbindungen der Formel I überwiegend, noch stärker bevorzugt bestehen sie im Wesentlichen und ganz besonders bevorzugt bestehen sie vollständig daraus: 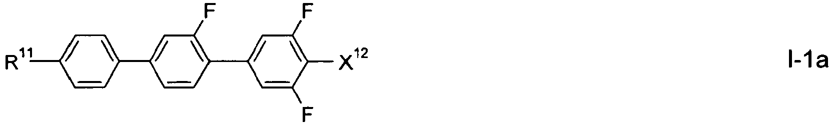 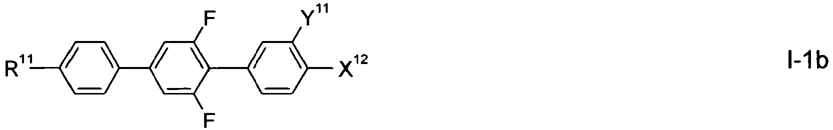 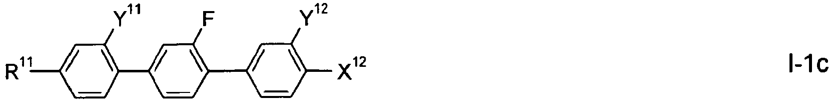 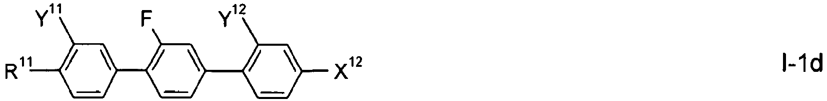 worin die Parameter die jeweiligen oben bei Formel I-1 angegebenen Bedeutungen haben und worin
- Y¹¹ und Y¹²: jeweils unabhängig voneinander H oder F bedeuten, und bevorzugt
- R¹¹: Alkyl oder Alkenyl, und
- X¹¹: F, Cl oder -OCF₃, bedeuten.

Bevorzugt werden die Verbindungen der Formel I-2 ausgewählt aus der Gruppe der Verbindungen der Formeln I-2a bis I-2e und/oder aus der Gruppe der Verbindungen der Formeln I-2f und I-2g, stärker bevorzugt bestehen diese Verbindungen der Formel I-2 überwiegend, noch stärker bevorzugt bestehen sie im Wesentlichen und ganz besonders bevorzugt bestehen sie vollständig daraus: 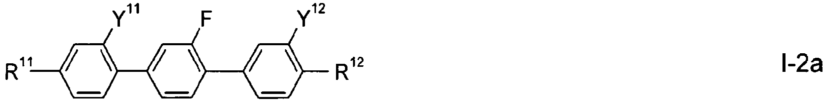 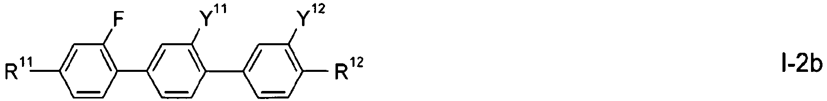 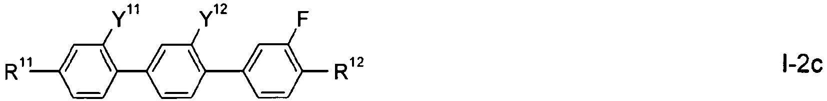 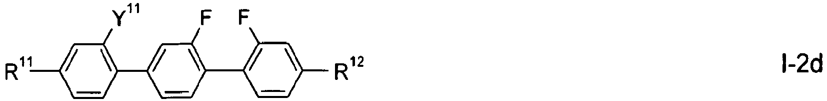 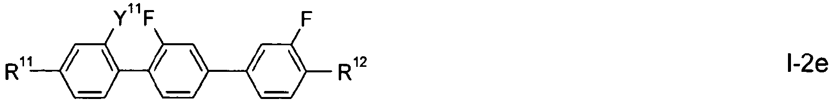 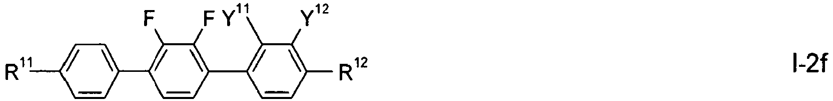 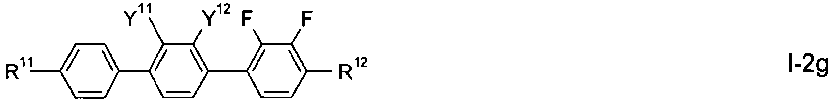 wobei jeweils die Verbindungen der Formel I-2a von den Verbindungen der Formeln I-2b und I-2c, die Verbindungen der Formel I-2b von den Verbindungen der Formel I-2c und die Verbindungen der Formel I-2g von den Verbindungen der Formel I-2f ausgeschlossen sind, und

worin die Parameter die jeweiligen oben bei Formel I-1 angegebenen Bedeutungen haben und worin
- Y¹¹ und Y¹²: jeweils unabhängig voneinander H oder F bedeuten, und bevorzugt
- R¹¹: Alkyl oder Alkenyl,
- X¹¹: F, Cl oder -OCF₃ bedeuten, und bevorzugt einer von
- Y¹¹ und Y¹²: H und der andere H oder F, bevorzugt ebenfalls H bedeutet.

Bevorzugt sind die Verbindungen der Formel I-3 Verbindungen der Formel I-3a: 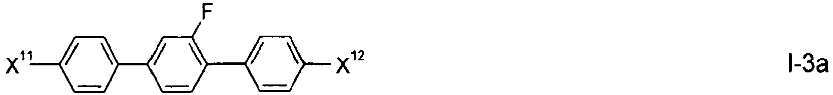 worin die Parameter die jeweiligen oben bei Formel I-1 angegebenen Bedeutungen haben und worin bevorzugt
- X¹¹: F, Cl, bevorzugt F,
- X¹²: F, Cl oder -OCF₃, bevorzugt -OCF₃ bedeutet.

In einer noch stärker bevorzugten Ausführungsform der vorliegenden Erfindung werden die Verbindungen der Formel I ausgewählt aus der Gruppe der Verbindungen I-1a bis I-1d, bevorzugt ausgewählt aus der Gruppe der Verbindungen I-1c und I-1d, stärker bevorzugt bestehen die Verbindungen der Formel I überwiegend, noch stärker bevorzugt bestehen sie im Wesentlichen und ganz besonders bevorzugt bestehen sie vollständig daraus:

Bevorzugt werden die Verbindungen der Formel I-1a ausgewählt aus der Gruppe der Verbindungen der Formeln I-1a-1 und I-1a-2, stärker bevorzugt bestehen diese Verbindungen der Formel I-1a überwiegend, noch stärker bevorzugt bestehen sie im Wesentlichen und ganz besonders bevorzugt bestehen sie vollständig daraus: 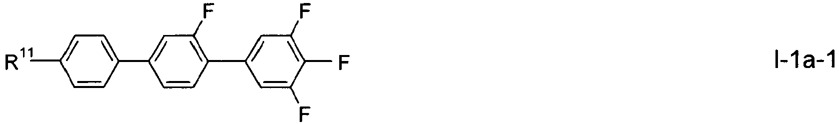 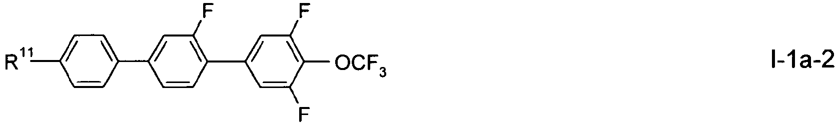 worin
- R¹¹: die oben angegebene Bedeutung hat und bevorzugt CₙH₂ₙ₊₁ bedeutet, worin
- n: eine ganze Zahl im Bereich von 0 bis 7, bevorzugt im Bereich von 1 bis 5 und besonders bevorzugt 3 oder 7 bedeutet.

Bevorzugt sind die Verbindungen der Formel I-1b Verbindungen der Formel I-1b-1: 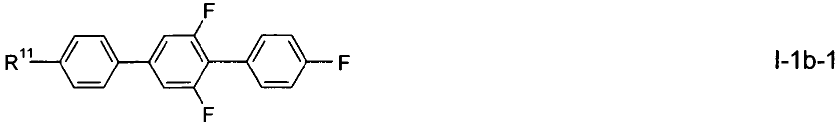 worin
- R¹¹: die oben angegebene Bedeutung hat und bevorzugt CₙH₂ₙ₊₁ bedeutet, worin
- n: eine ganze Zahl im Bereich von 0 bis 15, bevorzugt im Bereich von 1 bis 7 und besonders bevorzugt 1 bis 5 bedeutet.

Bevorzugt werden die Verbindungen der Formel I-1c ausgewählt aus der Gruppe der Verbindungen der Formeln I-1c-1 und I-1c-4, bevorzugt ausgewählt aus der Gruppe der Verbindungen der Formeln I-1c-1 und I-1c-2, stärker bevorzugt bestehen diese Verbindungen der Formel I-1c überwiegend, noch stärker bevorzugt bestehen sie im Wesentlichen und ganz besonders bevorzugt bestehen sie vollständig daraus: 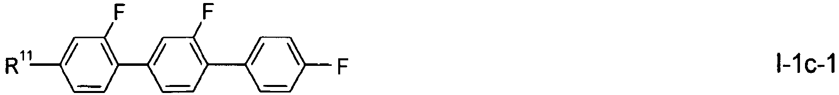 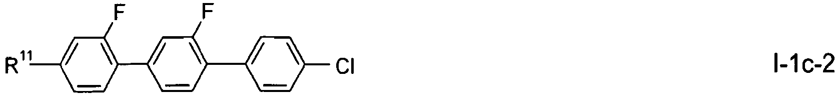 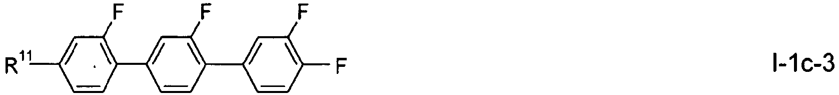 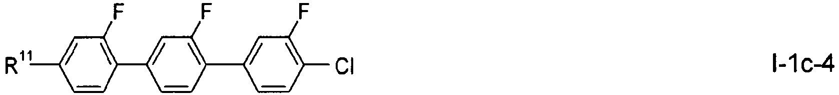 worin
- R¹¹: die oben angegebene Bedeutung hat und bevorzugt CₙH₂ₙ₊₁ bedeutet, worin
- n: eine ganze Zahl im Bereich von 0 bis 15, bevorzugt im Bereich von 1 bis 7 und besonders bevorzugt 1 bis 5 bedeutet.

Bevorzugt werden die Verbindungen der Formel I-1d ausgewählt aus der Gruppe der Verbindungen der Formeln I-1d-1 und I-1d-2, bevorzugt der Verbindung der Formel I-1d-2, stärker bevorzugt bestehen diese Verbindungen der Formel I-1d überwiegend, noch stärker bevorzugt bestehen sie im Wesentlichen und ganz besonders bevorzugt bestehen sie vollständig daraus: 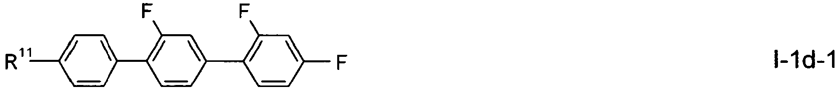 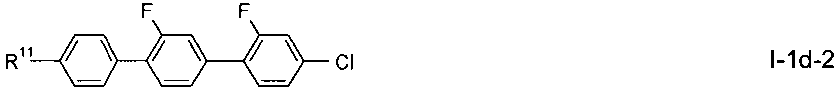 worin
- R¹¹: die oben angegebene Bedeutung hat und bevorzugt CₙH₂ₙ₊₁ bedeutet, worin
- n: eine ganze Zahl im Bereich von 0 bis 15, bevorzugt im Bereich von 1 bis 7 und besonders bevorzugt 1 bis 5 bedeutet.

Bevorzugt werden die Verbindungen der Formel I-2a ausgewählt aus der Gruppe der Verbindungen der Formel I-2a-1 und I-2a-2, bevorzugt der Verbindungen der Formeln I-1a-1, stärker bevorzugt bestehen diese Verbindungen der Formel I-2a überwiegend, noch stärker bevorzugt bestehen sie im Wesentlichen und ganz besonders bevorzugt bestehen sie vollständig daraus: 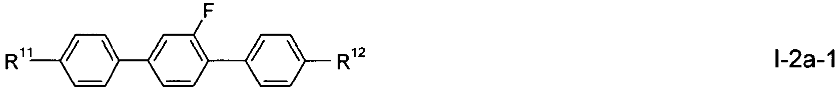 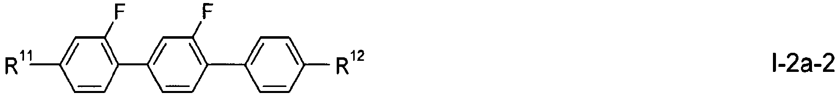 worin
- R¹¹: die oben angegebene Bedeutung hat und bevorzugt CₙH₂ₙ₊₁ oder CH₂=CH-(CH₂)_{Z} bedeutet, und
- R¹²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Bevorzugte Kombinationen von (R¹¹ und R¹²), insbesondere bei Formel I-2a-1 sind (CₙH₂ₙ₊₁ und CₘH₂ₘ₊₁), (CₙH₂ₙ₊₁ und O-CₘH₂ₘ₊₁), (CH₂=CH-(CH₂)_{Z} und CₘH₂ₘ₊₁), (CH₂=CH-(CH₂)_{Z} und O-CₘH₂ₘ₊₁) und (CₙH₂ₙ₊₁ und (CH₂)_{Z}-CH=CH₂).

Bevorzugte Verbindungen der Formel I-2b sind die Verbindungen der Formel I-2b-1: 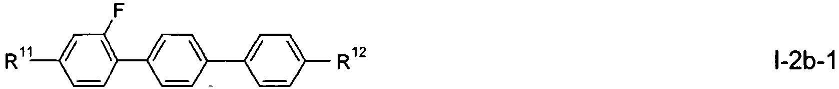 worin
- R¹¹: die oben angegebene Bedeutung hat und bevorzugt CₙH₂ₙ₊₁ oder CH₂=CH-(CH₂)_{Z} bedeutet, und
- R¹²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugte Kombination von (R¹¹ und R¹²) ist hier insbesondere (CₙH₂ₙ₊₁ und CₘH₂ₘ₊₁).

Bevorzugte Verbindungen der Formel I-2c sind die Verbindungen der Formel I-2c-1: 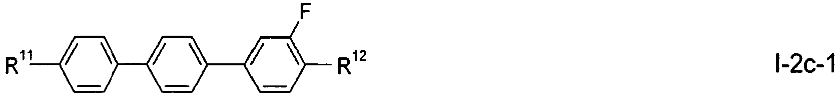 worin
- R¹¹: die oben angegebene Bedeutung hat und bevorzugt CₙH₂ₙ₊₁ oder CH₂=CH-(CH₂)_{Z} bedeutet, und
- R¹²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugte Kombination von (R¹¹ und R¹²) ist hier insbesondere (CₙH₂ₙ₊₁ Und CₘH₂ₘ₊₁).

Bevorzugte Verbindungen der Formel I-2d sind die Verbindungen der Formel I-2d-1: 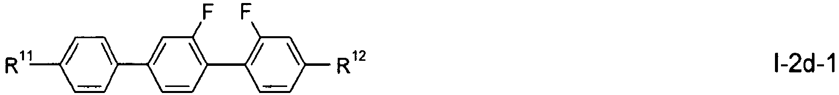 worin
- R¹¹: die oben angegebene Bedeutung hat und bevorzugt CₙH₂ₙ₊₁ oder CH₂=CH-(CH₂)_{Z} bedeutet, und
- R¹²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugte Kombination von (R¹¹ und R¹²) ist hier insbesondere (CₙH₂ₙ₊₁ und CₘH₂ₘ₊₁).

Bevorzugte Verbindungen der Formel I-2e sind die Verbindungen der Formel I-2e-1: 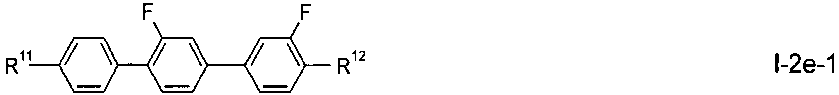 worin
- R¹¹: die oben angegebene Bedeutung hat und bevorzugt CₙH₂ₙ₊₁ oder CH₂=CH-(CH₂)_{Z} bedeutet, und
- R¹²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugte Kombination von (R¹¹ und R¹²) ist hier insbesondere (CₙH₂ₙ₊₁ und O-CₘH₂ₘ₊₁).

Bevorzugte Verbindungen der Formel I-2f sind die Verbindungen der Formel I-2f1: 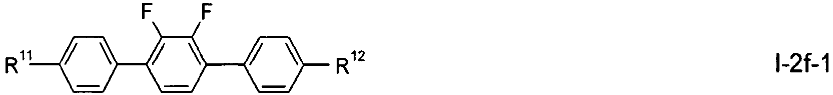 worin
- R¹¹: die oben angegebene Bedeutung hat und bevorzugt CₙH₂ₙ₊₁ oder CH₂=CH-(CH₂)_{Z} bedeutet, und
- R¹²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R¹¹ und R¹²) sind hier insbesondere (CₙH₂ₙ₊₁ und CₘH₂ₘ₊₁) und (CₙH₂ₙ₊₁ und O-CₘH₂ₘ₊₁), besonders bevorzugt (CₙH₂ₙ₊₁ und CₘH₂ₘ₊₁).

Bevorzugte Verbindungen der Formel I-2g sind die Verbindungen der Formel I-2g-1: 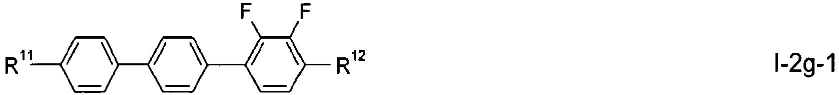 worin
- R¹¹: die oben angegebene Bedeutung hat und bevorzugt CₙH₂ₙ₊₁ oder CH₂=CH-(CH₂)_{Z} bedeutet, und
- R¹²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R¹¹ und R¹²) sind hier insbesondere (CₙH₂ₙ₊₁ und CₘH₂ₘ₊₁) und (CₙH₂ₙ₊₁ und O-CₘH₂ₘ₊₁), besonders bevorzugt (CₙH₂ₙ₊₁ und O-CₘH₂ₘ₊₁).

Bevorzugt werden die Verbindungen der Formeln II ausgewählt aus der Gruppe der Verbindungen der Formeln II-1 bis II-4, stärker bevorzugt bestehen diese Verbindungen der Formel II überwiegend, noch stärker bevorzugt bestehen sie im Wesentlichen und ganz besonders bevorzugt bestehen sie vollständig daraus: 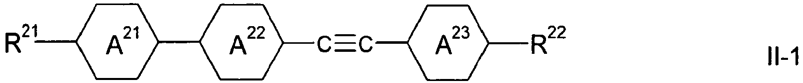 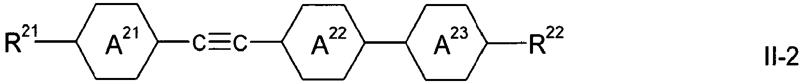 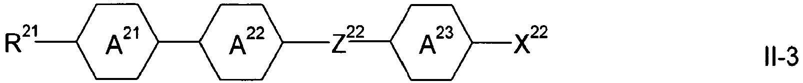 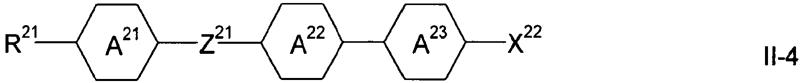 worin
- Z²¹ und Z²²: *trans-* -CH=CH- oder *trans-* -CF=CF-, bevorzugt *trans-* -CH=CH-, bedeutet, und die übrigen Parameter die oben unter Formel II gegebene Bedeutung haben und bevorzugt
- R²¹ und R²²: unabhängig voneinander H, unfluoriertes Alkyl oder Alkoxy mit 1 bis 7 C-Atomen oder unfluoriertes Alkenyl mit 2 bis 7 C-Atomen, bedeuten,
- X²²: F, Cl, -CN oder -NCS, vorzugsweise -NCS, bedeutet,
und einer von 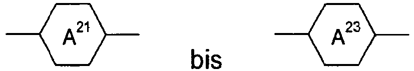 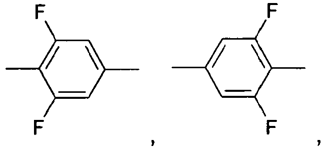 oder 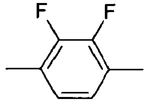 bedeutet und die anderen unabhängig voneinander 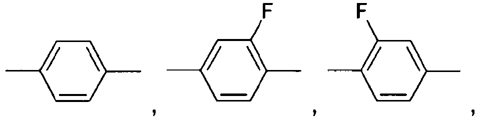 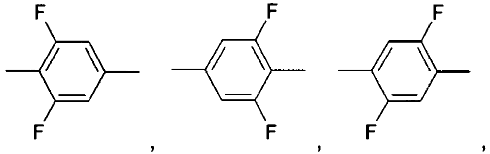 oder 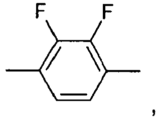 vorzugsweise 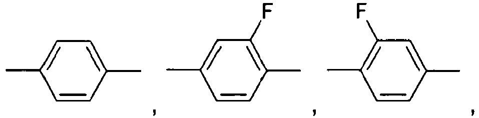 oder 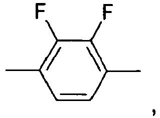 bedeuten und bevorzugt
- R²¹: CₙH₂ₙ₊₁ oder CH₂=CH-(CH₂)_{Z} bedeutet, und
- R²²: CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet
und wobei die Verbindungen der Formel II-2 von den Verbindungen der Formel II-1 ausgeschlossen sind.

Bevorzugt werden die Verbindungen der Formel II-1 ausgewählt aus der Gruppe der Verbindungen der Formeln II-1a und II-1b, bevorzugt ausgewählt aus der Gruppe der Verbindungen der Formel II-1a, stärker bevorzugt bestehen diese Verbindungen der Formel II-1 überwiegend, noch stärker bevorzugt bestehen sie im Wesentlichen und ganz besonders bevorzugt bestehen sie vollständig daraus: 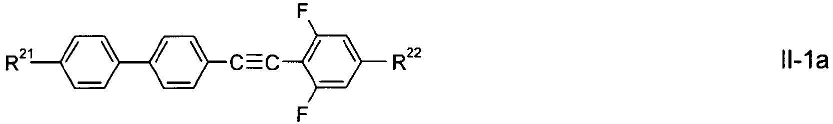 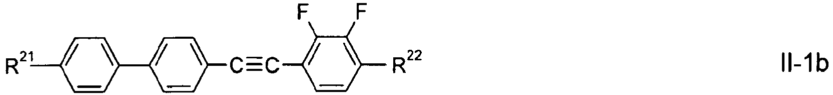 worin
- R²¹: die oben angegebene Bedeutung hat und bevorzugt CₙH₂ₙ₊₁ oder CH₂=CH-(CH₂)_{Z} bedeutet, und
- R²²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R²¹ und R²²) sind hier insbesondere (CₙH₂ₙ₊₁ und CₘH₂ₘ₊₁) und (CₙH₂ₙ₊₁ und O-CₘH₂ₘ₊₁), bei Formel II-1a besonders bevorzugt (CₙH₂ₙ₊₁ und CₘH₂ₘ₊₁) und bei Formel II-1b besonders bevorzugt (CₙH₂ₙ₊₁ und O-CₘH₂ₘ₊₁).

Bevorzugt sind die Verbindungen der Formel II-2 Verbindungen der Formel II-2a: 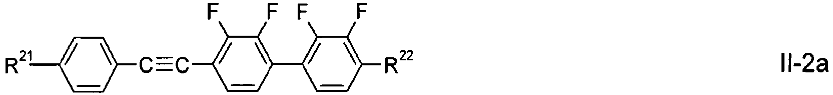 worin
- R²¹: die oben angegebene Bedeutung hat und bevorzugt CₙH₂ₙ₊₁ oder CH₂=CH-(CH₂)_{Z} bedeutet, und
- R²²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R²¹ und R²²) sind hier insbesondere (CₙH₂ₙ₊₁ und CₘH₂ₘ₊₁) und (CₙH₂ₙ₊₁ und O-CₘH₂ₘ₊₁).

Bevorzugt sind die Verbindungen der Formel II-3 Verbindungen der Formel II-3a: 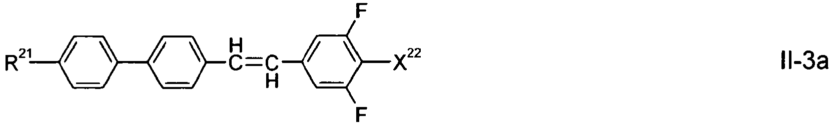 worin die Parameter die oben unter Formel II-3 gegebene Bedeutung haben und bevorzugt
- R²¹: die oben angegebene Bedeutung hat und bevorzugt CₙH₂ₙ₊₁ bedeutet, worin
- n: eine ganze Zahl im Bereich von 0 bis 7, bevorzugt im Bereich von 1 bis 5, und
- X²²: -F, -Cl, -OCF₃, -CN oder -NCS, besonders bevorzugt -NCS, bedeutet.

Bevorzugt sind die Verbindungen der Formel II-4 Verbindungen der Formel II-4a: 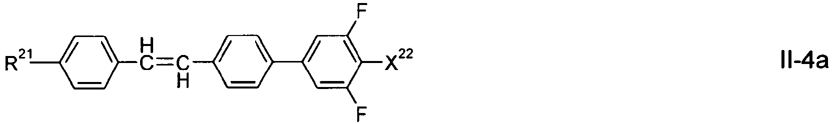 worin die Parameter die oben unter Formel II-4 gegebene Bedeutung haben und bevorzugt
- R²¹: die oben angegebene Bedeutung hat und bevorzugt CₙH₂ₙ₊₁ bedeutet, worin
- n: eine ganze Zahl im Bereich von 0 bis 7, bevorzugt im Bereich von 1 bis 5, und
- X²²: -F, -Cl, -OCF₃, -CN oder -NCS, besonders bevorzugt -NCS, bedeutet.

Weitere bevorzugte Verbindungen der Formel II sind die Verbindungen der folgenden Formeln: 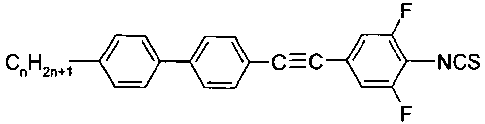 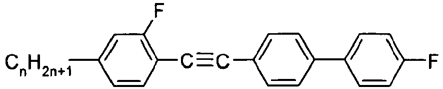 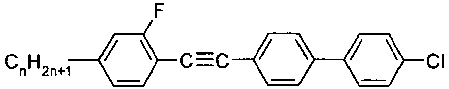 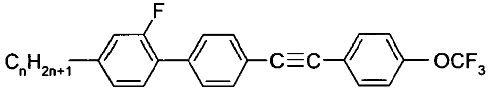 worin
- n: eine ganze Zahl im Bereich von 0 bis 7, bevorzugt im Bereich von 1 bis 5 bedeutet.

Bevorzugt werden die Verbindungen der Formel III ausgewählt aus der Gruppe der Verbindungen der Formeln III-1 bis III-7, stärker bevorzugt bestehen diese Verbindungen der Formel III überwiegend, noch stärker bevorzugt bestehen sie im Wesentlichen und ganz besonders bevorzugt bestehen sie vollständig daraus: 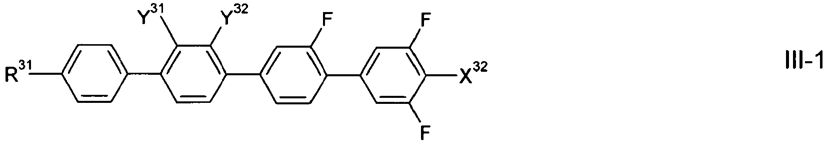 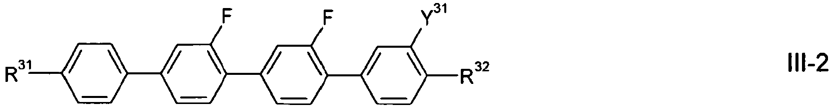 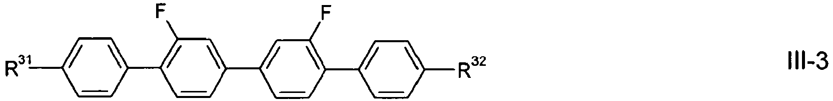 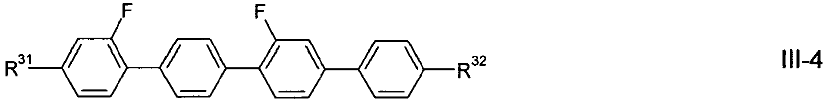 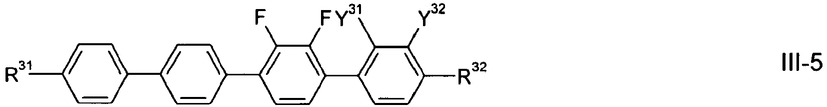 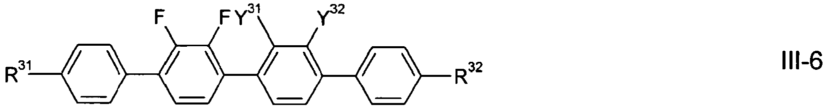 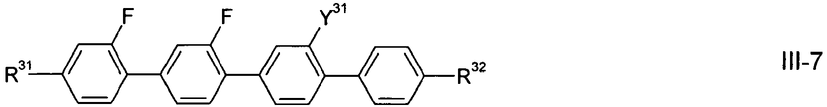 wobei die Verbindungen der Formel III-5 von den Verbindungen der Formel III-6 ausgeschlossen sind, und
worin die Parameter die jeweiligen oben bei Formel I angegebenen Bedeutungen haben und bevorzugt
- R³¹: unfluoriertes Alkyl oder Alkoxy jeweils mit 1 bis 7 C-Atomen oder unfluoriertes Alkenyl mit 2 bis 7 C-Atomen,
- R³²: unfluoriertes Alkyl oder Alkoxy, jeweils mit 1 bis 7 C-Atomen oder unfluoriertes Alkenyl mit 2 bis 7 C-Atomen, und
- X³²: F, Cl, oder -OCF₃, bevorzugt F, bedeutet, und besonders bevorzugt
- R³¹: die oben angegebene Bedeutung hat und bevorzugt CₙH₂ₙ₊₁ oder CH₂=CH-(CH₂)_{Z} bedeutet, und
- R³²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Bevorzugt werden die Verbindungen der Formel III-1 ausgewählt aus der Gruppe der Verbindungen der Formeln III-1a bis III-1d, stärker bevorzugt bestehen diese Verbindungen der Formel III-1 überwiegend, noch stärker bevorzugt bestehen sie im Wesentlichen und ganz besonders bevorzugt bestehen sie vollständig daraus: 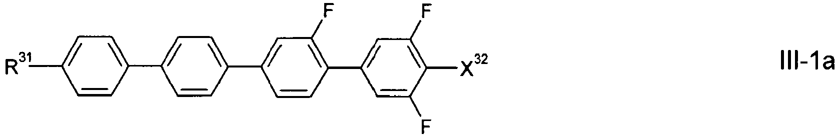 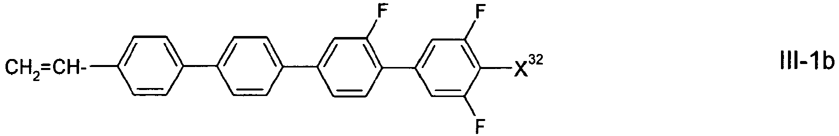 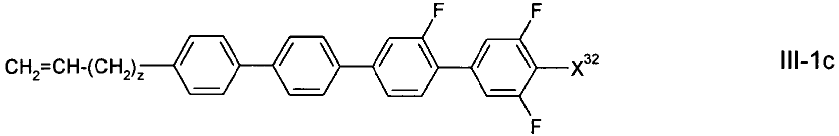 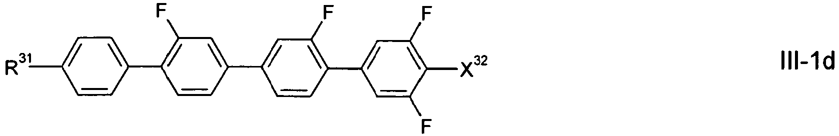 worin X³² die oben bei Formel III-2 gegebene Bedeutung hat und
- R³¹: die oben angegebene Bedeutung hat und bevorzugt CₙH₂ₙ₊₁ bedeutet, worin
- n: 1 bis 7, bevorzugt 2 bis 6, besonders bevorzugt 2, 3 oder 5 und
- z: 0, 1, 2, 3 oder 4, bevorzugt 0 oder 2, und
- X³²: bevorzugt F
bedeutet.

Bevorzugt werden die Verbindungen der Formel III-2 ausgewählt aus der Gruppe der Verbindungen der Formeln III-2a und III-2b, bevorzugt der Formel III-2a, stärker bevorzugt bestehen diese Verbindungen der Formel III-2 überwiegend, noch stärker bevorzugt bestehen sie im Wesentlichen und ganz besonders bevorzugt bestehen sie vollständig daraus: 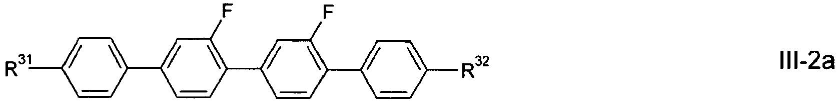 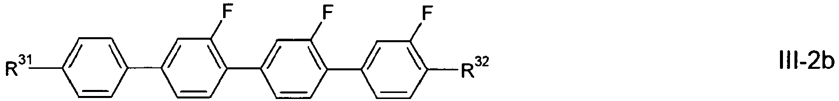 worin
- R³¹: die oben angegebene Bedeutung hat und bevorzugt CₙH₂ₙ₊₁ oder CH₂=CH-(CH₂)_{Z} bedeutet, und
- R³²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R³¹ und R³²) sind hier insbesondere (CₙH₂ₙ₊₁ und CₘH₂ₘ₊₁) und (CₙH₂ₙ₊₁ und O-CₘH₂ₘ₊₁), besonders bevorzugt (CₙH₂ₙ₊₁ und CₘH₂ₘ₊₁).

Bevorzugt sind die Verbindungen der Formel III-3 Verbindungen der Formel III-3a: 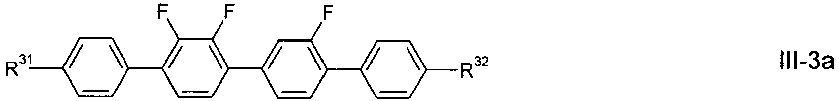 worin
- R³¹: die oben angegebene Bedeutung hat und bevorzugt CₙH₂ₙ₊₁ oder CH₂=CH-(CH₂)_{Z} bedeutet, und
- R³²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R³¹ und R³²) sind hier insbesondere (CₙH₂ₙ₊₁ und CₘH₂ₘ₊₁) und (CₙH₂ₙ₊₁ und O-CₘH₂ₘ₊₁), besonders bevorzugt (CₙH₂ₙ₊₁ und CₘH₂ₘ₊₁).

Bevorzugt sind die Verbindungen der Formel III-4 Verbindungen der Formel III-4a: 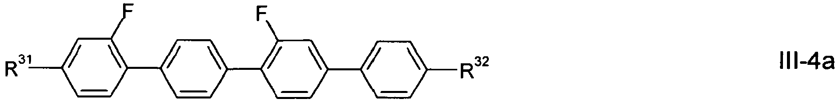 worin
- R³¹: die oben angegebene Bedeutung hat und bevorzugt CₙH₂ₙ₊₁ oder CH₂=CH-(CH₂)_{Z} bedeutet, und
- R³²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R³¹ und R³²) sind hier insbesondere (CₙH₂ₙ₊₁ und CₘH₂ₘ₊₁) und (CₙH₂ₙ₊₁ und O-CₘH₂ₘ₊₁), besonders bevorzugt (CₙH₂ₙ₊₁ Und CₘH₂ₘ₊₁).

Bevorzugt werden die Verbindungen der Formel III-5 ausgewählt aus der Gruppe der Verbindungen der Formeln III-5a und III-5b, bevorzugt der Formel III-5astärker bevorzugt bestehen diese Verbindungen der Formel III-5 überwiegend, noch stärker bevorzugt bestehen sie im Wesentlichen und ganz besonders bevorzugt bestehen sie vollständig daraus: 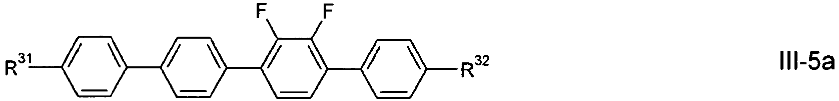 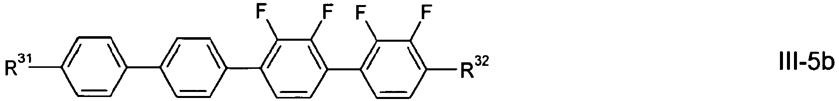 worin
- R³¹: die oben angegebene Bedeutung hat und bevorzugt CₙH₂ₙ₊₁ oder CH₂=CH-(CH₂)_{Z} bedeutet, und
- R³²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R³¹ und R³²) sind hier insbesondere (CₙH₂ₙ₊₁ und CₘH₂ₘ₊₁) und (CₙH₂ₙ₊₁ und O-CₘH₂ₘ₊₁), besonders bevorzugt (CₙH₂ₙ₊₁ und CₘH₂ₘ₊₁).

Bevorzugt werden die Verbindungen der Formel III-6 ausgewählt aus der Gruppe der Verbindungen der Formeln III-6a und III-6b, stärker bevorzugt bestehen diese Verbindungen der Formel III-6 überwiegend, noch stärker bevorzugt bestehen sie im Wesentlichen und ganz besonders bevorzugt bestehen sie vollständig daraus: 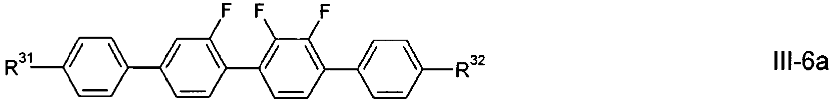 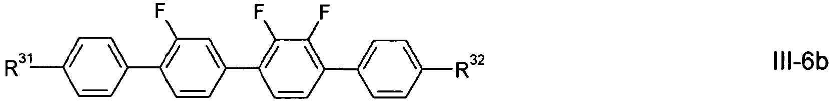 worin
- R³¹: die oben angegebene Bedeutung hat und bevorzugt CₙH₂ₙ₊₁ oder CH₂=CH-(CH₂)_{Z} bedeutet, und
- R³²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R³¹ und R³²) sind hier insbesondere (CₙH₂ₙ₊₁ und CₘH₂ₘ₊₁) und (CₙH₂ₙ₊₁ und O-CₘH₂ₘ₊₁), besonders bevorzugt (CₙH₂ₙ₊₁ Und CₘH₂ₘ₊₁).

Optional enthalten die Medien gemäß der vorliegenden Erfindung eine oder mehrere Verbindungen der Formel IV 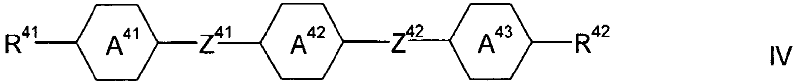 worin
- R⁴¹ und R⁴²: unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,
- einer von Z⁴¹ und Z⁴²: *trans-* -CH=CH-, *trans-* -CF=CF- oder -C=C- bedeutet und der andere unabhängig davon *trans-* -CH=CH-, *trans-* -CF=CF- oder eine Einfachbindung bedeutet, vorzugsweise einer von ihnen -C=C- oder *trans-*-CH=CH- und der andere eine Einfachbindung bedeutet, und 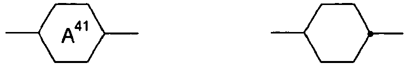 bedeutet, 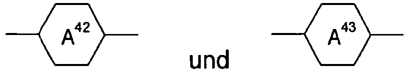 unabhängig voneinander 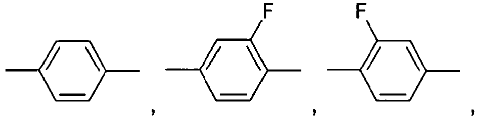 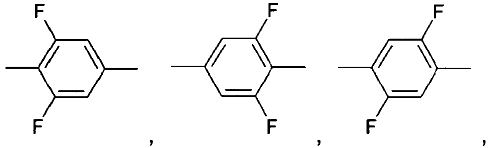 oder 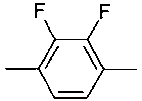 bedeuten.

Bevorzugt enthalten die flüssigkristallinen Medien gemäß der vorliegenden Anmeldung insgesamt 0 bis 40 %, bevorzugt 0 bis 30 % und besonders bevorzugt 5 bis 25 % an Verbindungen der Formel IV.

Bevorzugt werden die Verbindungen der Formeln IV ausgewählt aus der Gruppe der Verbindungen der Formeln IV-1 bis IV-3, stärker bevorzugt bestehen diese Verbindungen der Formel IV überwiegend, noch stärker bevorzugt bestehen sie im Wesentlichen und ganz besonders bevorzugt bestehen sie vollständig daraus: 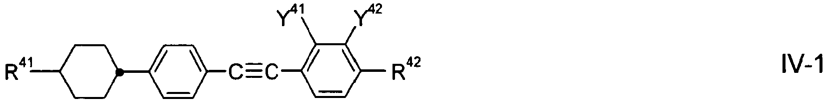 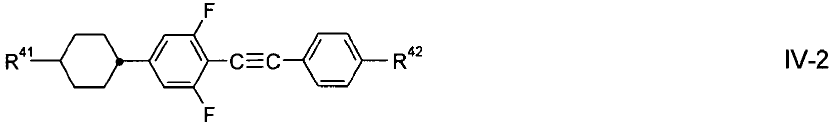 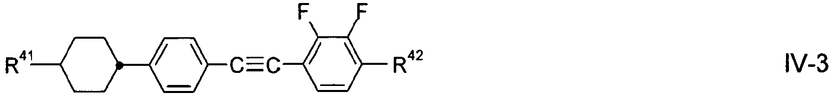 worin
einer von
- Y⁴¹ und Y⁴²: H bedeutet und der andere H oder F bedeutet, und
- R⁴¹: die oben angegebene Bedeutung hat und bevorzugt CₙH₂ₙ₊₁ oder CH₂=CH-(CH₂)_{Z} bedeutet, und
- R⁴²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R⁴¹ und R⁴²) sind hier insbesondere (CₙH₂ₙ₊₁ und CₘH₂ₘ₊₁) und (CₙH₂ₙ₊₁ und O-CₘH₂ₘ₊₁) besonders bevorzugt (CₙH₂ₙ₊₁ und CₘH₂ₘ₊₁).

Bevorzugt werden die Verbindungen der Formel IV-1 ausgewählt aus der Gruppe der Verbindungen der Formeln IV-1a bis IV-1c, stärker bevorzugt bestehen diese Verbindungen der Formel IV-1 überwiegend, noch stärker bevorzugt bestehen sie im Wesentlichen und ganz besonders bevorzugt bestehen sie vollständig daraus: 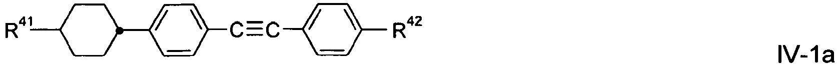 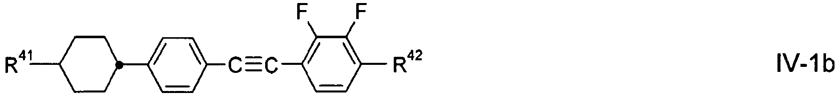 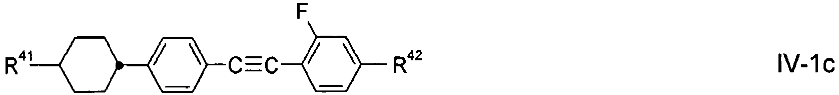 worin
- R⁴¹: die oben angegebene Bedeutung hat und bevorzugt CₙH₂ₙ₊₁ oder CH₂=CH-(CH₂)_{Z} bedeutet, und
- R⁴²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R⁴¹ und R⁴²) sind hier insbesondere (CₙH₂ₙ₊₁ und CₘH₂ₘ₊₁) und (CₙH₂ₙ₊₁ und O-CₘH₂ₘ₊₁) besonders bevorzugt (CₙH₂ₙ₊₁ und CₘH₂ₘ₊₁).

Bevorzugt sind die Verbindungen der Formel IV-2 Verbindungen der Formel IV-2a: 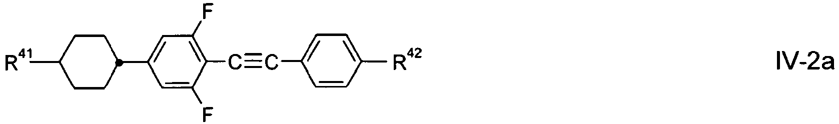 worin
- R⁴¹: die oben angegebene Bedeutung hat und bevorzugt CₙH₂ₙ₊₁ oder CH₂=CH-(CH₂)_{Z} bedeutet, und
- R⁴²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R⁴¹ und R⁴²) sind hier insbesondere (CₙH₂ₙ₊₁ und CₘH₂ₘ₊₁), CₙH₂ₙ₊₁ und O-CₘH₂ₘ₊₁) und (CH₂=CH-(CH₂)_{Z} und CₘH₂ₘ₊₁) besonders bevorzugt (CₙH₂ₙ₊₁ und CₘH₂ₘ₊₁).

Bevorzugt sind die Verbindungen der Formel IV-3 Verbindungen der Formel IV-3a: 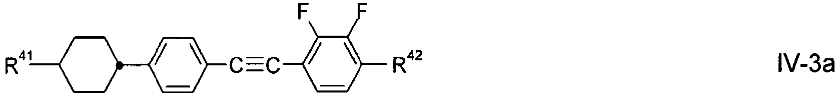 worin
- R⁴¹: die oben angegebene Bedeutung hat und bevorzugt CₙH₂ₙ₊₁ oder CH₂=CH-(CH₂)_{Z} bedeutet, und
- R⁴²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R⁴¹ und R⁴²) sind hier insbesondere (CₙH₂ₙ₊₁ und CₘH₂ₘ₊₁) und (CₙH₂ₙ₊₁ und O-CₘH₂ₘ₊₁).

Optional enthalten die Medien gemäß der vorliegenden Erfindung eine oder mehrere Verbindungen der Formel V 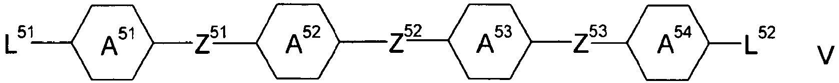 worin
- L⁵¹: R⁵¹ oder X⁵¹ bedeutet,
- L⁵²: R⁵² oder X⁵² bedeutet,
- R⁵¹ und R⁵²: unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,
- X⁵¹ und X⁵²: unabhängig voneinander H, F, Cl, -CN, -NCS, -SF₅, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und
- Z⁵¹ bis Z⁵³: unabhängig voneinander *trans-* -CH=CH-, *trans-*-CF=CF-, -C=C- oder eine Einfachbindung bedeuten bevorzugt einer oder mehrere von ihnen eine Einfachbindung bedeutet, und besonders bevorzugt alle eine Einfachbindung bedeuten, 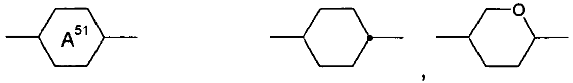 oder 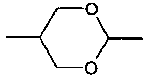 bedeutet, 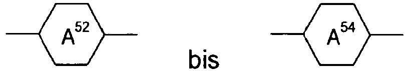 unabhängig voneinander 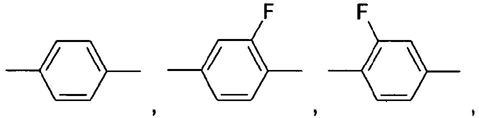 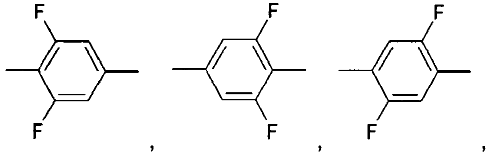 oder 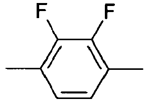 bedeuten.

Bevorzugt werden die Verbindungen der Formel V ausgewählt aus der Gruppe der Verbindungen der Formeln V-1 bis IV-3, stärker bevorzugt bestehen diese Verbindungen der Formel V überwiegend, noch stärker bevorzugt bestehen sie im Wesentlichen und ganz besonders bevorzugt bestehen sie vollständig daraus: 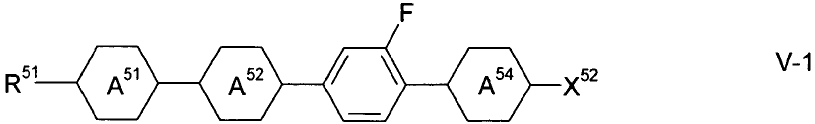 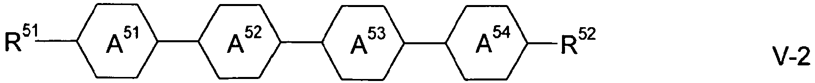 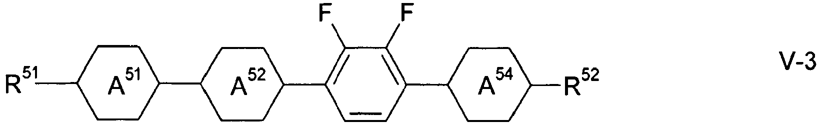 worin die Parameter die jeweilige oben unter Formel V angegebene Bedeutung haben und bevorzugt
einer von 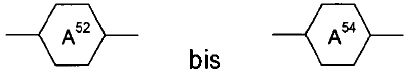 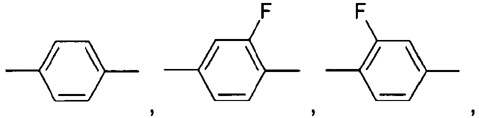 bedeutet
und
worin
- R⁵¹: die oben angegebene Bedeutung hat und bevorzugt CₙH₂ₙ₊₁ oder CH₂=CH-(CH₂)_{Z} bedeutet, und
- R⁵²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R⁵¹ und R⁵²) sind hier insbesondere (CₙH₂ₙ₊₁ und CₘH₂ₘ₊₁) und (CₙH₂ₙ₊₁ und O-CₘH₂ₘ₊₁).

Bevorzugt enthalten die flüssigkristallinen Medien gemäß der vorliegenden Anmeldung insgesamt 5 bis 30 %, bevorzugt 10 bis 25 % und besonders bevorzugt 15 bis 20 % an Verbindungen der Formel V.

Bevorzugt werden die Verbindungen der Formel V-1 ausgewählt aus der Gruppe der Verbindungen der Formeln V-1a bis V-1e, stärker bevorzugt bestehen diese Verbindungen der Formel V-1 überwiegend, noch stärker bevorzugt bestehen sie im Wesentlichen und ganz besonders bevorzugt bestehen sie vollständig daraus: 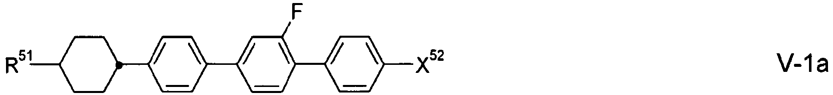 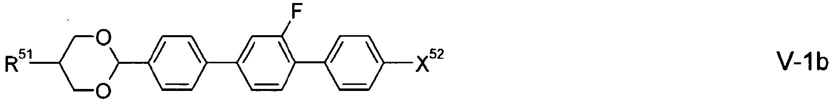 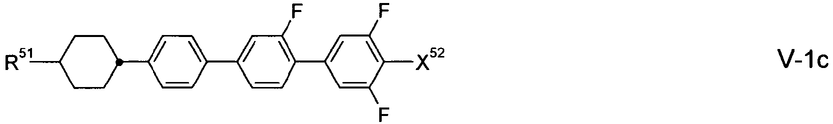 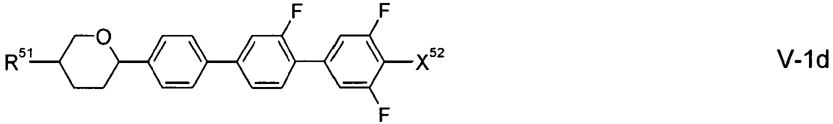 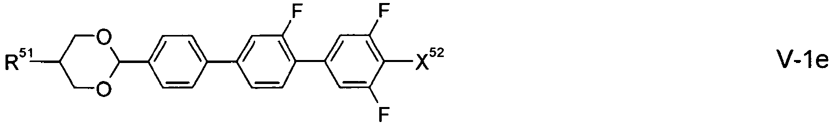 worin die Parameter die oben gegebene Bedeutung haben und bevorzugt
- R⁵¹: die oben angegebene Bedeutung hat und bevorzugt CₙH₂ₙ₊₁ bedeutet, und
- n: eine ganze Zahl im Bereich von 0 bis 15, bevorzugt im Bereich von 1 bis 7 und besonders bevorzugt 1 bis 5 bedeutet und
- X⁵²: bevorzugt F oder Cl bedeutet.

Bevorzugt werden die Verbindungen der Formel V-2 ausgewählt aus der Gruppe der Verbindungen der Formeln V-2a und V-2b, stärker bevorzugt bestehen diese Verbindungen der Formel V-2 überwiegend, noch stärker bevorzugt bestehen sie im Wesentlichen und ganz besonders bevorzugt bestehen sie vollständig daraus: 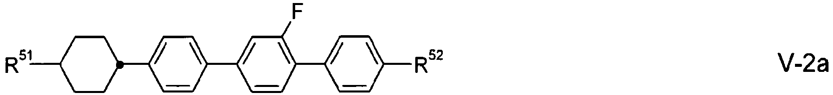 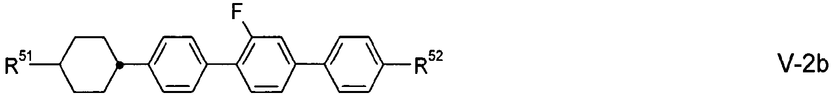 worin
- R⁵¹: die oben angegebene Bedeutung hat und bevorzugt CₙH₂ₙ₊₁ oder CH₂=CH-(CH₂)_{Z} bedeutet, und
- R⁵²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugte Kombination von (R⁵¹ und R⁵²) ist hier insbesondere (CₙH₂ₙ₊₁ Und CₘH₂ₘ₊₁).

Bevorzugt sind die Verbindungen der Formel V-3 Verbindungen der Formeln V-3a und V-3b: 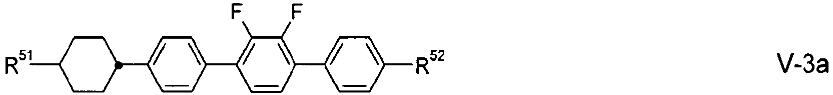 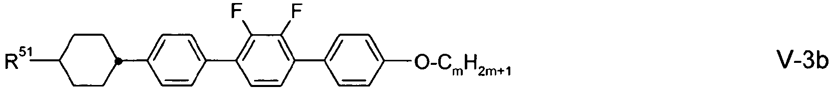 worin
- R⁵¹: die oben angegebene Bedeutung hat und bevorzugt CₙH₂ₙ₊₁ oder CH₂=CH-(CH₂)_{Z} bedeutet, und
- R⁵²: die oben angegebene Bedeutung hat und bevorzugt CₘH₂ₘ₊₁ oder O-CₘH₂ₘ₊₁ oder (CH₂)_{Z}-CH=CH₂ bedeutet, und worin
- n und m: unabhängig voneinander eine ganze Zahl im Bereich von 0 bis 15, bevorzugt im Bereich von 1 bis 7 und besonders bevorzugt 1 bis 5 bedeuten und
- z: 0, 1, 2, 3 oder 4, bevorzugt 0 oder 2 bedeutet.

Die bevorzugten Kombinationen von (R⁵¹ und R⁵²) sind hier insbesondere (CₙH₂ₙ₊₁ und CₘH₂ₘ₊₁) und (CₙH₂ₙ₊₁ und O-CₘH₂ₘ₊₁), besonders bevorzugt (CₙH₂ₙ₊₁ und O-CₘH₂ₘ₊₁).

In einer bevorzugten Ausführungsform der vorliegenden Erfindung enthält das Medium eine oder mehrere dielektrisch positive Verbindungen mit einer dielektrischen Anisotropie von mehr als 3 der Formel I-1.

Vorzugsweise enthält das Medium eine oder mehrere, dielektrisch neutrale Verbindungen mit einer dielektrischen Anisotropie im Bereich von mehr als -1,5 bis 3 der Formel I-2.

In einer bevorzugten Ausführungsform der vorliegenden Erfindung enthält das Medium eine oder mehrere Verbindungen der Formel II.

In einer weiteren bevorzugten Ausführungsform der vorliegenden Erfindung enthält das Medium eine oder mehrere Verbindungen der Formel III.

Bevorzugt enthalten die flüssigkristallinen Medien gemäß der vorliegenden Erfindung 10 % oder weniger, bevorzugt 5 % oder weniger, besonders bevorzugt 2 % oder weniger, ganz besonders bevorzugt 1 % oder weniger, und insbesondere überhaupt keine Verbindung mit nur zwei oder weniger fünf und/oder sechsgliedrigen Ringen.

Die Definitionen der Abkürzungen (Akronyme) sind ebenfalls unten in Tabelle D angegeben, bzw. aus den Tabellen A bis C zu ersehen.

Vorzugsweise enthalten die flüssigkristallinen Medien gemäß der vorliegenden Erfindung Verbindungen ausgewählt aus der Gruppe der Verbindungen der Formeln I bis V, vorzugsweise I bis IV und ganz bevorzugt I bis III und/oder V, stärker bevorzugt bestehen sie überwiegend, noch stärker bevorzugt bestehen sie im Wesentlichen und ganz bevorzugt bestehen sie vollständig daraus.

In dieser Anmeldung bedeutet enthalten im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

Überwiegend bestehen bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

Im Wesentlichen bestehen bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.
Vollständig bestehen bedeutet in diesem Zusammenhang, dass die betreffende Entität 98 % oder mehr, vorzugsweise 99 % oder mehr und ganz bevorzugt 100,0 % der angegebenen Komponente oder Komponenten oder Verbindung oder Verbindungen enthält.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.
Die Flüssigkristallmedien gemäß der vorliegenden Erfindung weisen bevorzugt einen Klärpunkt von 90°C oder mehr, stärker bevorzugt von 100°C oder mehr, noch stärker bevorzugt von 120°C oder mehr, besonders bevorzugt von 150°C oder mehr und ganz besonders bevorzugt von 170°C oder mehr, auf.

Vorzugsweise erstreckt sich die nematische Phase der erfindungsgemäßen Medien mindestens von 20°C oder weniger bis 90°C oder mehr, bevorzugt bis 100°C oder mehr, stärker bevorzugt mindestens von 0°C oder weniger bis 120°C oder mehr, ganz bevorzugt mindestens von -10°C oder weniger bis 140°C oder mehr und insbesondere mindestens von - 20°C oder weniger bis 150°C oder mehr.

Das Δε des Flüssigkristallmediums gemäß der Erfindung bei 1 kHz und 20°C beträgt vorzugsweise 1 oder mehr, stärker bevorzugt 2 oder mehr und ganz bevorzugt 3 oder mehr.

Das Δn der Flüssigkristallmedien gemäß der vorliegenden Erfindung liegt bei 589 nm (Na^{D}) und 20°C vorzugsweise im Bereich von 0,200 oder mehr bis 0,90 oder weniger, stärker bevorzugt im Bereich von 0,250 oder mehr bis 0,90 oder weniger, noch stärker bevorzugt im Bereich von 0,300 oder mehr bis 0, 85 oder weniger und ganz besonders bevorzugt im Bereich von 0,350 oder mehr bis 0,800 oder weniger.

In einer bevorzugten Ausführungsform der vorliegenden Anmeldung beträgt das Δn der Flüssigkristallmedien gemäß der vorliegenden Erfindung vorzugsweise 0,50 oder mehr, stärker bevorzugt 0,55 oder mehr. Gemäß der vorliegenden Erfindung werden die einzelnen Verbindungen der Formel I vorzugsweise in einer Gesamtkonzentration von 10 % bis 70 %, stärker bevorzugt von 20 % bis 60 %, noch stärker bevorzugt von 30 % bis 50 % und ganz bevorzugt von 25 % bis 45 % der Gesamtmischung verwendet.

Die Verbindungen der Formel II werden vorzugsweise in einer Gesamtkonzentration von 1 % bis 20 %, stärker bevorzugt von 1 % bis 15 %, noch stärker bevorzugt von 2 % bis 15 % und ganz bevorzugt von 3 % bis 10 % der Gesamtmischung verwendet.

Die Verbindungen der Formel III werden vorzugsweise in einer Gesamtkonzentration von 1 % bis 60 %, stärker bevorzugt von 5 % bis 50 %, noch stärker bevorzugt von 10 % bis 45 % und ganz bevorzugt von 15 % bis 40 % der Gesamtmischung verwendet.

Die Flüssigkristallmedien enthalten vorzugsweise insgesamt 50 % bis 100 %, stärker bevorzugt 70 % bis 100 % und ganz bevorzugt 80 % bis 100 % und insbesondere 90 % bis 100 % der Verbindungen der Formeln I, II, III, IV und V, vorzugsweise der Formeln I, III, IV und V, vorzugsweise bestehen sie überwiegend daraus und ganz bevorzugt bestehen sie vollständig daraus.

In der vorliegenden Anmeldung beschreibt der Ausdruck dielektrisch positiv Verbindungen oder Komponenten mit Δε > 3,0, dielektrisch neutral mit -1,5 ≤ Δε ≤ 3,0 und dielektrisch negativ mit Δε < -1,5. Δε wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Δε ist als (ε_{∥} - ε_{⊥}) definiert, während ε_{Drchschn}. (ε_{∥} + 2 ε_{⊥}) / 3 ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20°C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast (V₁₀) angegeben, der Ausdruck Sättigungsspannung bezeichnet die optische Sättigung und ist für 90 % relativen Kontrast (V₉₀) angegeben, in beiden Fällen, soweit nicht ausdrücklich etwas anderes angegeben ist. Die kapazitive Schwellenspannung (V₀), auch Freedericks-Schwelle V_{Fr} genannt, wird nur verwendet, wenn dies ausdrücklich genannt ist

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20°C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von Δε besitzen eine Schichtdicke von circa 20 µm. Bei der Elektrode handelt es sich um eine kreisförmige ITO-Elektrode mit einer Fläche von 1,13 cm² und einem Schutzring. Die Ausrichtungsschichten sind SE-1211 von Nissan Chemicals, Japan, für homeotrope Ausrichtung (ε_{∥}) und Polyimid AL-1054 von Japan Synthetic Rubber, Japan, für homogene Ausrichtung (ε_{⊥}). Die Bestimmung der Kapazitäten erfolgt mit einem Frequenzgang-Analysegerät Solatron 1260 unter Verwendung einer Sinuswelle mit einer Spannung von 0,3 Vᵣₘₛ. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen wurden unter senkrechter Beobachtung bestimmt. Die Schwellenspannung (V₁₀), "Mittgrau-Spannung" (V₅₀) und Sättigungsspannung (V₉₀) wurden für 10 %, 50 % bzw. 90 % relativen Kontrast bestimmt.

Die flüssigkristallinen Medien werden bezüglich ihrer Eigenschaften im Frequenzbereich der Mikrowellen untersucht wie in A. Penirschke, S. Müller, P. Scheele, C. Weil, M. Wittek, C. Hock und R. Jakoby: "Cavity Perturbation Method for Characterization of Liquid Crystals up to 35GHz", 34th European Microwave Conference - Amsterdam, S. 545-548 beschreiben.

Vergleiche hierzu auch A. Gaebler, F. Gölden, S. Müller, A. Penirschke und R. Jakoby "Direct Simulation of Material Permittivites ...", 12MTC 2009 - International Instrumentation and Measurement Technology Conference, Singapur, 2009 (IEEE), S. 463-467 und DE 10 2004 029 429 A, in der ebenfalls detailliert ein Meßverfahren beschrieben wird.

Der Flüssigkristall wird in eine Kapillare aus Polytetrafluorethylen (PTFE) gefüllt. Die Kapillare hat einen inneren Radius von 180 µm und einen äußeren Radius von 350 µm. Die effektive Länge beträgt 2,0 cm. Die gefüllte Kapillare wird in die Mitte der Kavität mit einer Resonanzfrequenz von 30 GHz eingebracht. Diese Kavität hat eine Länge von 6,6 mm, eine Breite von 7,1 mm und eine Höhe von 3,6 mm. Daraufhin wird das Eingangssignal ("source") angelegt und das Ergebnis des Ausgangssignals mit einem kommerziellen Netzwerkanalysator ("vector network analyzer") aufgenommen.

Aus der Änderung der Resonanzfrequenz und des Q-Faktors, zwischen der Messung mit der mit dem Flüssigkristall gefüllten Kapillare und der Messung ohne der mit dem Flüssigkristall gefüllten Kapillare, wird die dielektrische Konstante und der Verlustwinkel bei der entsprechenden Zielfrequenz mittels der Gleichungen 10 und 11 der A. Penirschke, S. Müller, P. Scheele, C. Weil, M. Wittek, C. Hock und R. Jakoby: "Cavity Perturbation Method for Characterization of Liquid Crystals up to 35GHz", 34th European Microwave Conference - Amsterdam, S. 545-548 bestimmt, wie dort beschrieben.

Die Werte für die Komponenten der Eigenschaften senkrecht bzw. parallel zum Direktor des Flüssigkristalls werden durch Orientierung des Flüssigkristalls in einem Magnetfeld ergalten. Dazu wird das Magnetfeld eines Permanentmagneten verwendet. Die Stärke des Magnetfelds beträgt 0.35 Tesla. Die Orientierung des Magneten wird entsprechend eingestellt und dann entsprechend um 90° gedreht.

Bevorzugte Bauelemente sind Phasenschieber, Varaktoren, Funk- und Radiowellenantennenarrays, "matching circuit adaptive filters" und andere.

In der vorliegenden Anmeldung, bedeutet, wenn nicht ausdrücklich anders angegeben, der Begriff Verbindungen sowohl eine Verbindung, als auch mehrere Verbindungen.
Die erfindungsgemäßen Flüssigkristallmedien weisen bevorzugt nematische Phasen von jeweils mindestens von -20°C bis 80°C, bevorzugt von -30°C bis 85°C und ganz besonders bevorzugt von -40°C bis 100°C auf. Insbesondere bevorzugt reicht die Phase bis 120°C oder mehr, bevorzugt bis140°C oder mehr und ganz besonders bevorzugt bis 180°C oder mehr. Hierbei bedeutet der Begriff eine nematische Phase aufweisen einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen, mit einer Schichtdicke von 5 µm, für mindestens 100 Stunden überprüft. Bei hohen Temperaturen wird der Klärpunkt nach üblichen Methoden in Kapillaren gemessen.

Ferner sind die erfindungsgemäßen Flüssigkristallmedien durch hohe optische Anisotropien im sichtbaren Bereich gekennzeichnet. Die Doppelbrechung bei 589 nm beträgt bevorzugt 0,20 oder mehr, besonders bevorzugt 0,25 oder mehr, besonders bevorzugt 0,30 oder mehr, besonders bevorzugt 0,40 oder mehr und ganz besonders bevorzugt 0,45 oder mehr. Außerdem beträgt die Doppelbrechung bevorzugt 0,80 oder weniger.

Bevorzugt weisen die eingesetzten Flüssigkristalle eine positive dielektische Anisotropie auf. Diese ist bevorzugt 2 oder größer, bevorzugt 4 oder größer, besonders bevorzugt 6 oder größer und ganz besonders bevorzugt 10 oder größer.

Ferner sind die erfindungsgemäßen Flüssigkristallmedien durch hohe Anisotropien im Mikrowellenbereich gekennzeichnet. Die Doppelbrechung beträgt z.B. bei ca. 8,3 GHz bevorzugt 0,14 oder mehr, besonders bevorzugt 0,15 oder mehr, besonders bevorzugt 0,20 oder mehr, besonders bevorzugt 0,25 oder mehr und ganz besonders bevorzugt 0,30 oder mehr. Außerdem beträgt die Doppelbrechung bevorzugt 0,80 oder weniger.

Die Materialgüte η(µ-Wellen)/tan(δ) der bevorzugten Flüssigkristallmaterialien beträgt 5 oder mehr, bevorzugt 6 oder mehr, bevorzugt 8 oder mehr, bevorzugt 10 oder mehr, bevorzugt 15 oder mehr, bevorzugt 17 oder mehr, besonders bevorzugt 20 oder mehr und ganz besonders bevorzugt 25 oder mehr.

Die bevorzugten Flüssigkristallmaterialien haben Phasenschiebergüten von 15°/dB oder mehr, bevorzugt von 20°/dB oder mehr, bevorzugt von 30°/dB oder mehr, bevorzugt von 40°/dB oder mehr, bevorzugt von 50°/dB oder mehr, besonders bevorzugt von 80°/dB oder mehr und ganz besonders bevorzugt von 100°/dB oder mehr.

In einigen Ausführungsformen können jedoch auch Flüssigkristalle mit eine negativen Wert der dielektrischen Anisotropie vorteilhaft verwendet werden.

Die eingesetzten Flüssigkristalle sind entweder Einzelsubstanzen oder Mischungen. Bevorzugt weisen sie eine nematische Phase auf.

Der Ausdruck "Alkyl" umfasst vorzugsweise geradkettige und verzweigte Alkylgruppen mit 1 bis 15 Kohlenstoffatomen, insbesondere die geradkettigen Gruppen Methyl, Ethyl, Propyl, Butyl, Pentyl, Hexyl und Heptyl. Gruppen mit 2 bis 10 Kohlenstoffatomen sind im allgemeinen bevorzugt.

Der Ausdruck "Alkenyl" umfasst vorzugsweise geradkettige und verzweigte Alkenylgruppen mit 2 bis 15 Kohlenstoffatomen, insbesondere die geradkettigen Gruppen. Besonders bevorzugte Alkenylgruppen sind C₂ bis C₇-1 E-Alkenyl, C₄ bis C₇-3E-Alkenyl, C₅ bis C₇-4-Alkenyl, C₆ bis C₇-5-Alkenyl und C₇-6-Alkenyl, insbesondere C₂ bis C₇-1 E-Alkenyl, C₄ bis C₇-3E-Alkenyl und C₅ bis C₇-4-Alkenyl. Beispiele weiterer bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.
Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl", bzw. Alkoxyalkyl umfasst vorzugsweise geradkettige Reste der Formel CₙH₂ₙ₊₁-O-(CH₂)ₘ, worin n und m jeweils unabhängig voneinander 1 bis 10 bedeuten. Vorzugsweise ist n 1 und m 1 bis 6.

Verbindungen mir einer Vinyl-Endgruppe und Verbindungen mit einer Methyl-Endgruppe haben eine geringe Rotationsviskosität.

In der vorliegenden Anmeldung bedeuten sowohl Hochfrequenztechnik als auch Höchstfrequenztechnik Anwendungen mit Frequenzen im Bereich von 1 MHz bis 1 THz, bevorzugt von 1 GHz bis 500GHz, stärker bevorzugt 2 GHz bis 300 GHz, insbesondere bevorzugt von ca. 5 bis 150 GHz.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und Flüssigkristallverbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.
Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen CₙH₂ₙ₊₁, CₘH₂ₘ₊₁ und CₗH₂ₗ₋₁ bzw. CₙH₂ₙ₋₁, CₘH₂ₘ₋₁ und CₗH₂ₗ₋₁ bedeuten geradkettiges Alkyl bzw. Alkenyl, vorzugsweise 1-E-Alkenyl, jeweils mit n, m bzw. I C-Atomen. In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 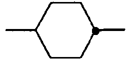 | | |
| **D** | 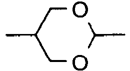 | **DI** | 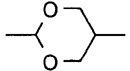 |
| **A** | 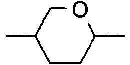 | **AI** | 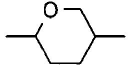 |
| **P** | 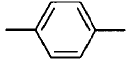 | | |
| **G** | 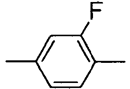 | **GI** | 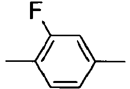 |
| **U** | 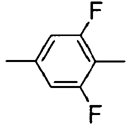 | **UI** | 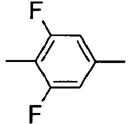 |
| **Y** | 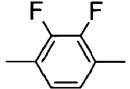 | | |
| **M** | 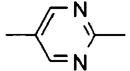 | **MI** | 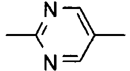 |
| **N** | 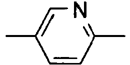 | **NI** | 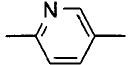 |
| **Np** | 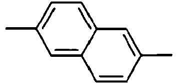 | | |
| **N3f** | 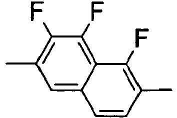 | **N3fl** | 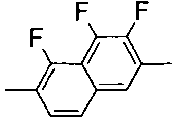 |
| **tH** | 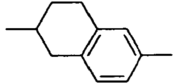 | **tHI** | 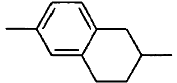 |
| **tH2f** | 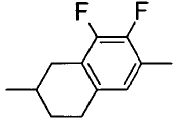 | **tH2fl** | 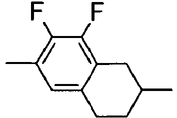 |
| **dH** | 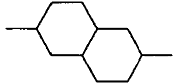 | | |
| **K** | 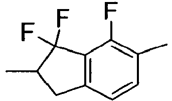 | **KI** | 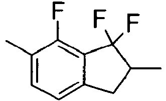 |
| **L** | 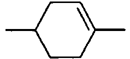 | **LI** | 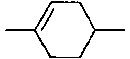 |
| **F** | 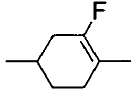 | **FI** | 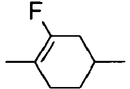 |

**Tabelle B: Verknüpfungsgruppen**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | | |

**Tabelle C: Endgruppen**

| **Linke Seite** | | **Rechte Seite, Verwendung allein** | |
|---|---|---|---|
| **-n-** | CₙH₂ₙ₊₁- | **-n** | --CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO- | **-OD** | -OCF₂H |
| **-TO-** | CF₃O- | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N=C-C=C- | **-AN** | -C≡C-C≡N |

| **Verwendung zusammen mit anderen** | | | |
|---|---|---|---|
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen bedeuten und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

**Tabelle D: Beispielstrukturen**

| |
|---|
| Die Beispielstrukturen sind besonders bevorzugt eingesetzte Verbindungen mit drei 6-gliedrigen Ringen: |
| 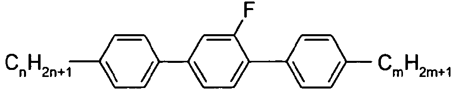 |
| **PGP-n-m** |
| 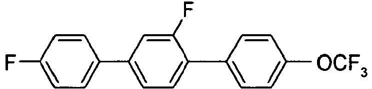 |
| **PGP-F-OT** |
| 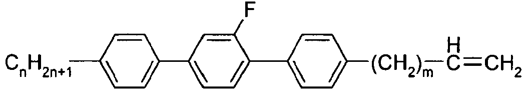 |
| **PGP-n-mV** |
| 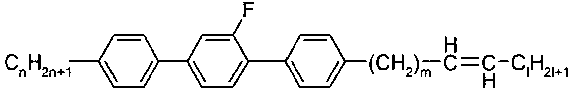 |
| **PGP-n-mVI** |
| 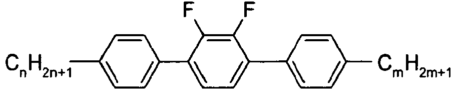 |
| **PYP-n-m** |
| 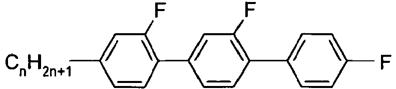 |
| **GGP-n-F** |
| 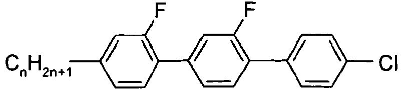 |
| **GGP-n-CL** |
| 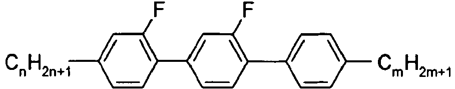 |
| **GGP-n-m** |
| 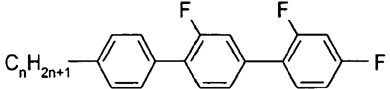 |
| **PGIGI-n-F** |
| 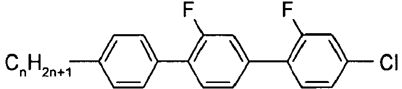 |
| **PGIGI-n-CL** |
| 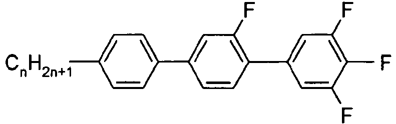 |
| **PGU-n-F** |
| 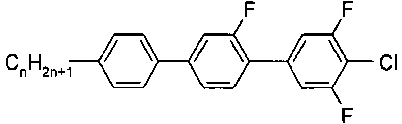 |
| **PGU-n-CL** |
| 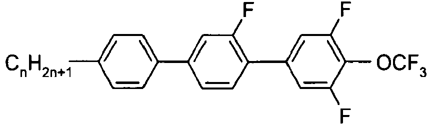 |
| **PGU-n-OT** |
| 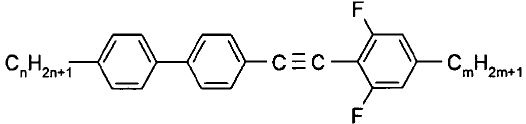 |
| **PPTUI-n-m** |
| 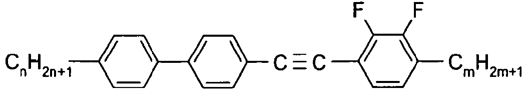 |
| **PPTY-n-m** |
| Die Beispielstrukturen sind besonders bevorzugt eingesetzte Verbindungen mit vier 6-gliedrigen Ringen: |
| 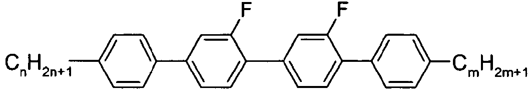 |
| **PGGP-n-m** |
| 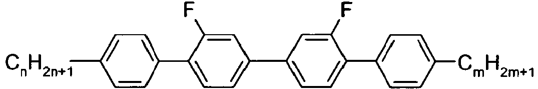 |
| **PGIGP-n-m** |
| 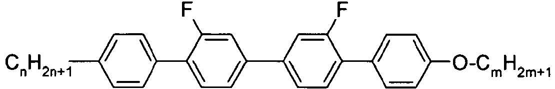 |
| **PGIGP-n-Om** |
| 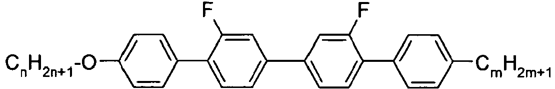 |
| **PGIGP-nO-m** |
| 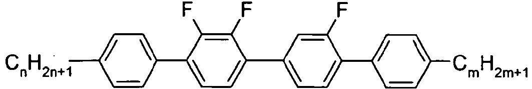 |
| **PYGP-n-m** |
| 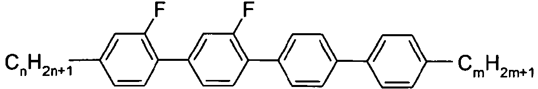 |
| **GGPP-n-m** |
| 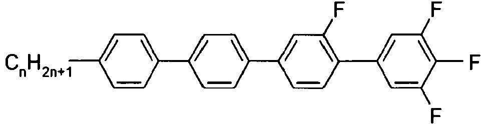 |
| **PPGU-n-F** |
| 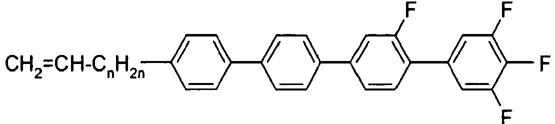 |
| **PPGU-Vn-F** |
| Beispielstrukturen bevorzugt eingesetzter dielktrisch neutraler Verbindungen: |
| 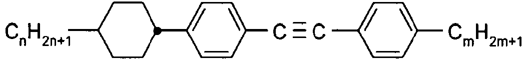 |
| **CPTP-n-m** |
| 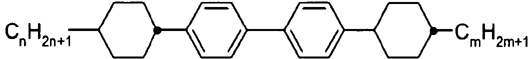 |
| **CPPC-n-m** |
| 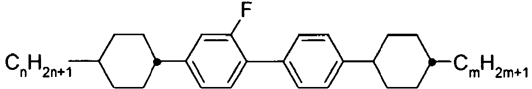 |
| **CGPC-n-m** |
| 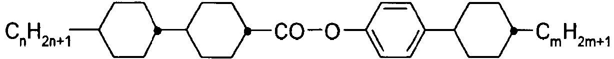 |
| **CCZPC-n-m** |
| 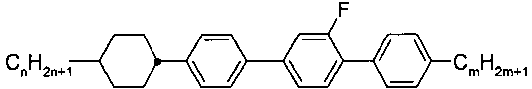 |
| **CPGP-n-m** |
| 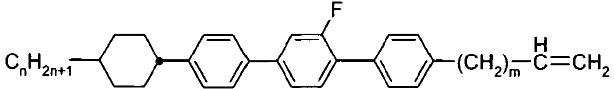 |
| **CPGP-n-mV** |
| 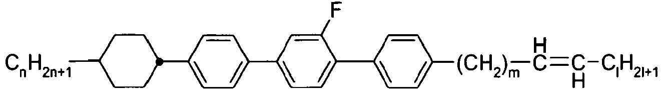 |
| **CPGP-n-mVI** |
| Beispielstrukturen weiterer eingesetzter Verbindungen: |
| 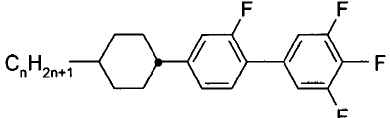 |
| **CGU-n-F** |
| 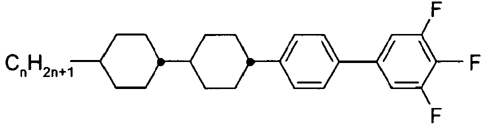 |
| **CCPU-n-F** |
| 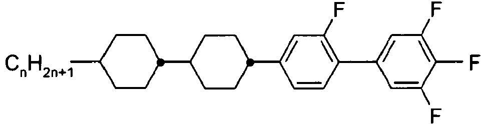 |
| **CCGU-n-F** |
| 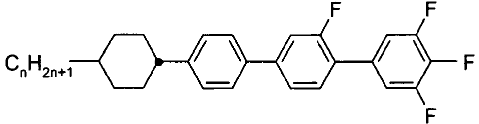 |
| **CPGU-n-F** |
| 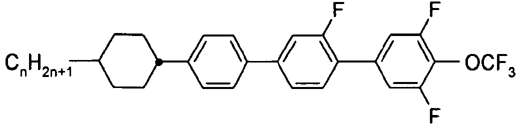 |
| **CPGU-n-OT** |
| 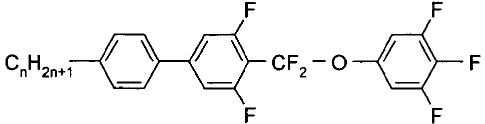 |
| **PUQU-n-F** |
| 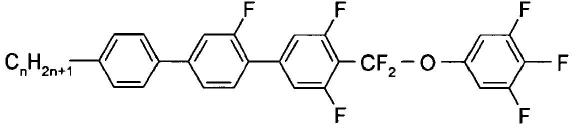 |
| **PGUQU-n-F** |
| 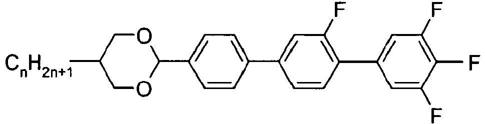 |
| **DPGU-n-F** |
| 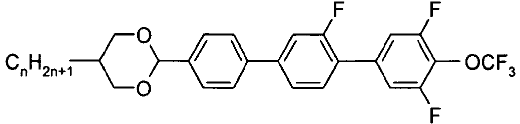 |
| **DPGU-n-OT** |
| 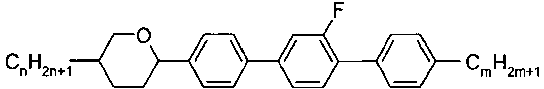 |
| **APGP-n-m** |

In der folgenden Tabelle, Tabelle E, sind Beispielverbindungen zusammengestellt, die in den mesogenen Medien gemäß der vorliegenden Erfindung als Stabilisator verwendet werden können. Die Gesamtkonzentration dieser bzw. ähnlicher Verbindungen in den Medien beträgt bevorzugt 5 % oder weniger.

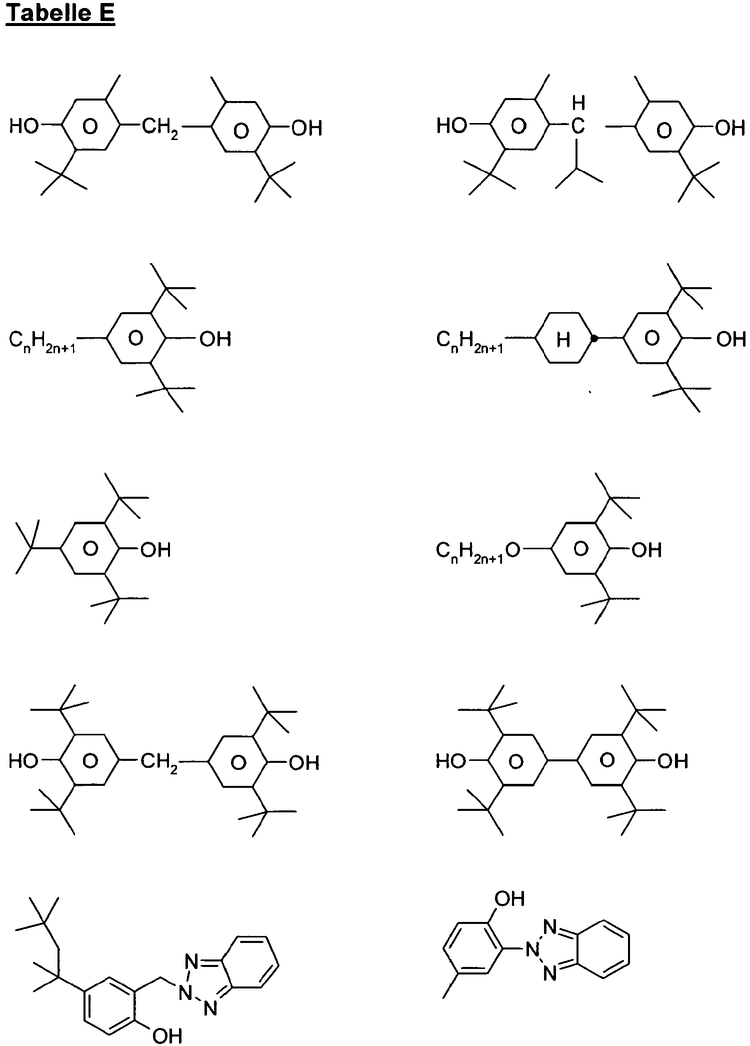

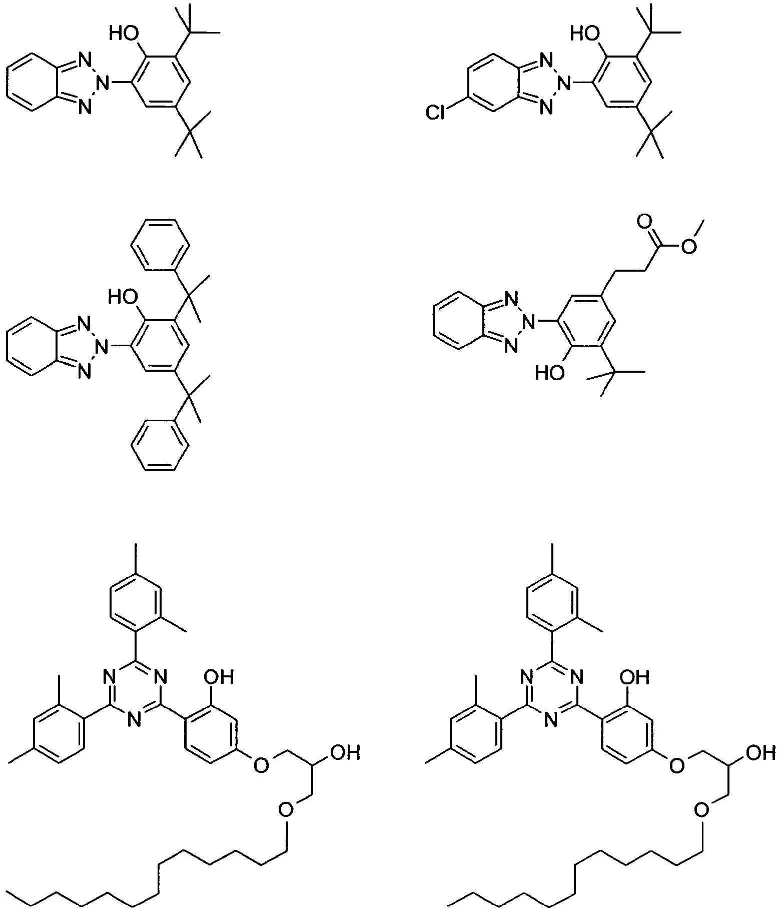

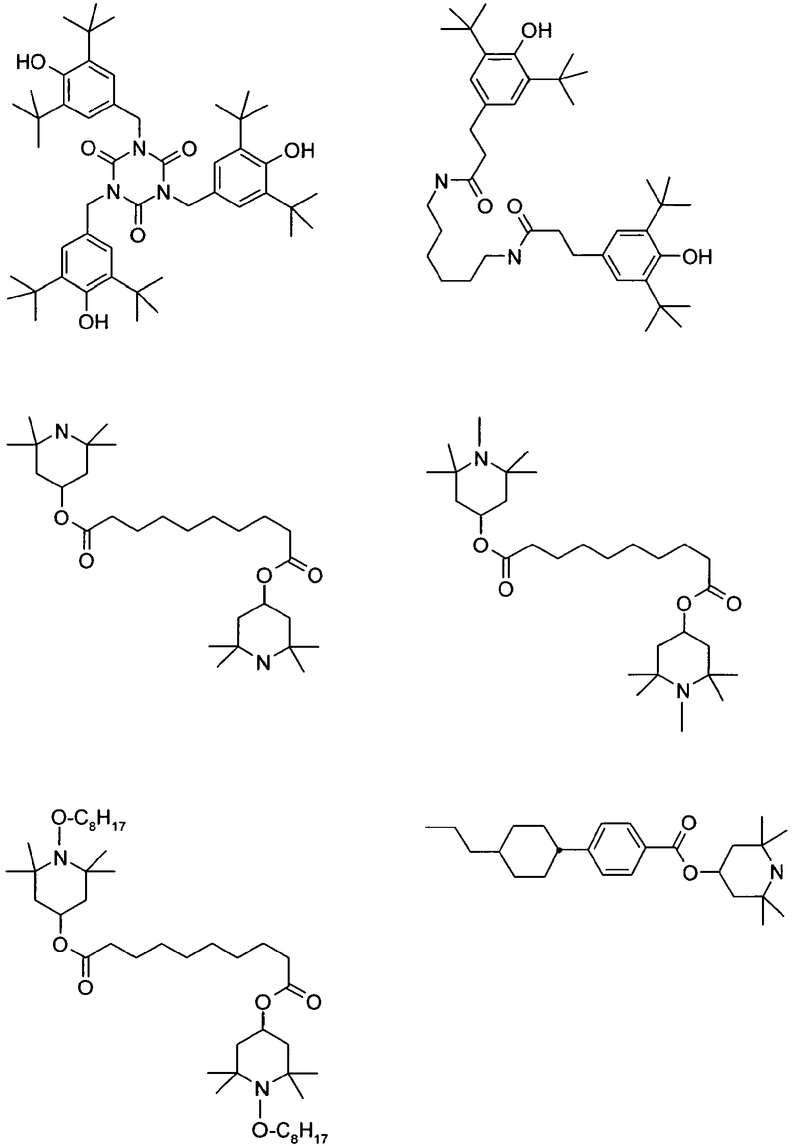

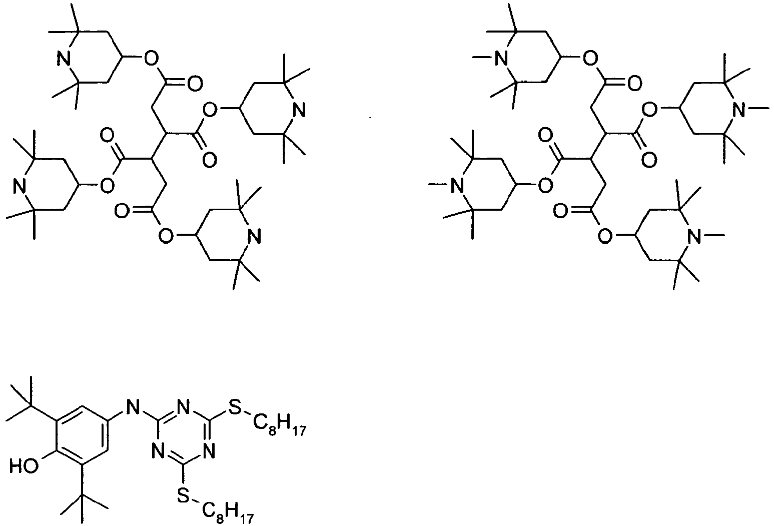

In einer bevorzugten Ausführungsform der vorliegenden Erfindung enthalten die mesogenen Medien eine oder mehrere Verbindungen ausgewählt aus der Gruppe der Verbindungen der Tabelle E.

In der folgenden Tabelle, Tabelle F, sind Beispielverbindungen zusammengestellt, die in den mesogenen Medien gemäß der vorliegenden Erfindung vorzugsweise als chirale Dotierstoffe verwendet werden können.

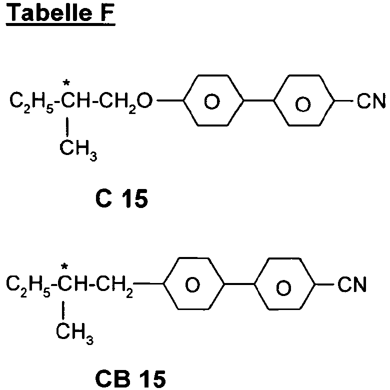

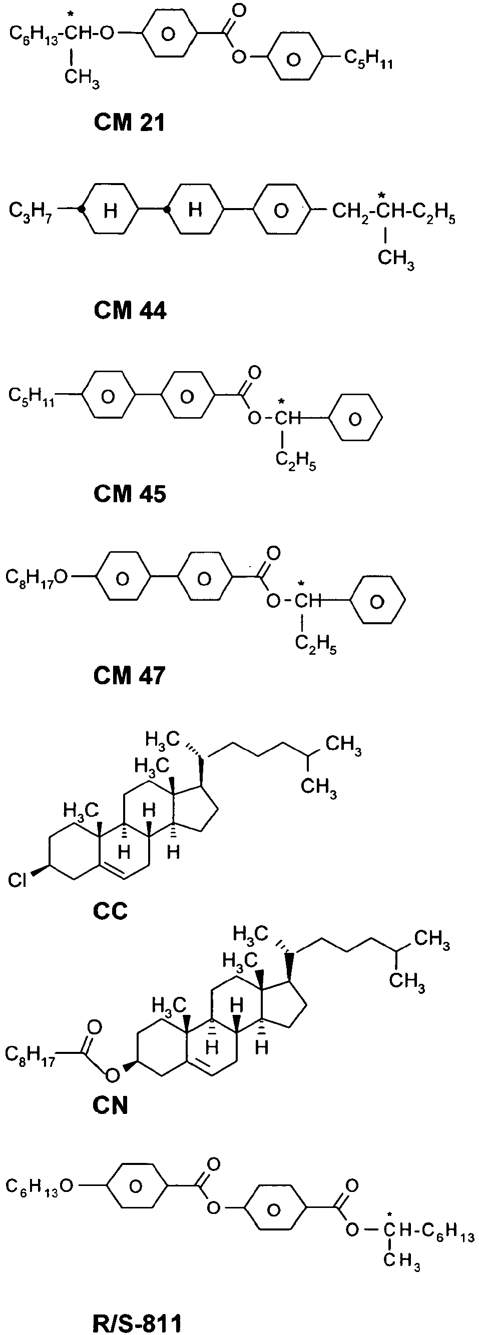

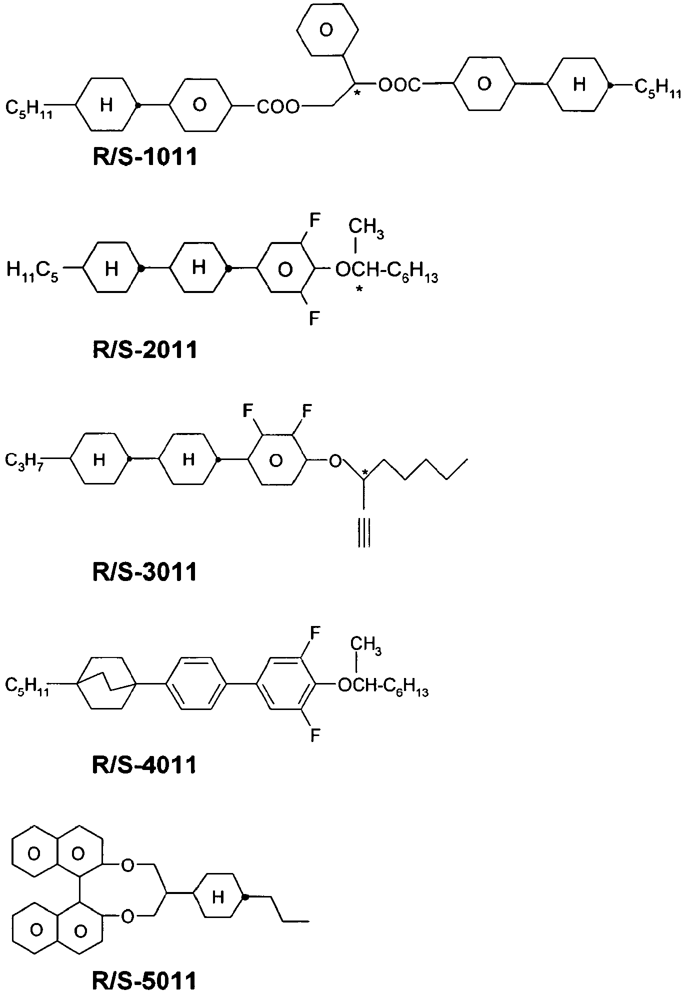

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise
- sieben oder mehr, vorzugsweise acht oder mehr Verbindungen, vorzugsweise Verbindungen mit drei oder mehr, vorzugsweise vier oder mehr unterschiedlichen Formeln, ausgewählt aus der Gruppe der Verbindungen der Tabelle D.

### Beispiele

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

### Beispiel 1

Es wird eine Flüssigkristallmischung M-1 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 171 °C |
| Nr. | Abkürzung | | | |
| 1 | GGP-5-CL | 26,0 | nₑ (20°C, 589,3 nm) | = 1,7859 |
| 2 | PGIGI-3-CL | 8,0 | Δn (20°C, 589,3 nm) | = 0,2954 |
| 3 | PGIGI-5-CL | 20,0 | | |
| 4 | PGIGI-5-F | 9,0 | ε_{∥} (20°C, 1 kHz) | = 6,4 |
| 5 | PPTY-3-4 | 3,0 | Δε (20°C, 1 kHz) | = 2,0 |
| 6 | PYGP-3-5 | 5,0 | | |
| 7 | PYGP-5-3 | 5,0 | γ1 (20°C) | = 650 mPa · s |
| 8 | CGPC-3-5 | 3,0 | | |
| 9 | CGPC-5-5 | 5,0 | | |
| 10 | CPGP-5-2 | 8,0 | | |
| 11 | CPGP-5-3 | 8,0 | | |
| ∑ | | 100,0 | | |

Diese Mischung eignet sich sehr gut für Anwendungen im Mikrowellenbereich, insbesondere für Phasenschieber.

**Tabelle 1: Eigenschaften der Mischung M-1 bei 30 GHz**

| T/°C | ε_{r,⊥} | ε_{r,∥} | tan δ_{ε r,⊥} | tan δ_{ε r,∥} | τ_{ε r} | η |
|---|---|---|---|---|---|---|
| 11,27 | 2,40 | 2,97 | 0,0109 | 0,0026 | 0,19 | 17,45 |
| 29,71 | 2,41 | 2,97 | 0,0159 | 0,0037 | 0,19 | 11,70 |
| 58,28 | 2,41 | 2,97 | 0,0252 | 0,0061 | 0,18 | 7,07 |
| 87,50 | 2,40 | 2,89 | 0,0372 | 0,0097 | 0,17 | 4,51 |

Bemerkung: bei 20°C ergibt sich intrapoliert näherungsweise: Δε_{r⊥} = 0,56, tan δ_{ε r,⊥} = 0,013 und η = 14,5.

Zum Vergleich erhält man mit der Verbindung 4'-Pentyl-4-cyanobiphenyl (auch 5CB oder K15 genannt, Merck KGaA) bei 20°C tan δ_{ε r,⊥} = 0,026 und η = 4,3.

**Tabelle 2: Vergleich der Eigenschaften bei 30 GHz bei 20°C**

| Beispiel | Flüssigkristall | Δε_{r⊥} | δ_{ε r,⊥} | η |
|---|---|---|---|---|
| 1 | M-1 | 0,56 | 0,013 | 14,5 |
| 2 | M-2 | 0,56 | 0,014 | 15 |
| Vergleich | 5CB | | 0,026 | 4,3 |

### Beispiel 2

Es wird eine Flüssigkristallmischung M-2 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 179,5 °C |
| Nr. | Abkürzung | | | |
| 1 | GGP-5-CL | 26,0 | nₑ (20°C, 589,3 nm) | = 1,7861 |
| 2 | PGIGI-3-CL | 8,0 | Δn (20°C, 589,3 nm) | = 0,3118 |
| 3 | PGIGI-5-CL | 20,0 | | |
| 4 | PGIGI-5-F | 5,0 | | |
| 5 | PPTY-3-4 | 3,0 | | |
| 6 | PYGP-4-4 | 4,0 | | |
| 7 | PYGP-5-3 | 5,0 | | |
| 8 | CCZPC-3-5 | 3,0 | | |
| 9 | CGPC-3-5 | 3,0 | | |
| 10 | CGPC-5-5 | 5,0 | | |
| 11 | CPGP-5-2 | 8,0 | | |
| 12 | CPGP-5-3 | 8,0 | | |
| ∑ | | 100,0 | | |

Diese Mischung eignet sich sehr gut für Anwendungen im Mikrowellenbereich, insbesondere für Phasenschieber.

**Tabelle 3: Eigenschaften der Mischung M-2 bei 30 GHz**

| T/°C | ε_{r,⊥} | ε_{r,∥} | tan δ_{ε r,⊥} | tan δ_{ε r,∥} | τ_{ε r} | FoM |
|---|---|---|---|---|---|---|
| 11,49 | 2,41 | 2,98 | 0,0108 | 0,0028 | 0,19 | 17,77 |
| 20,29 | 2,42 | 2,98 | 0,0130 | 0,0033 | 0,19 | 14,50 |
| 25,02 | 2,42 | 2,97 | 0,0143 | 0,0035 | 0,19 | 13,08 |
| 29,80 | 2,42 | 2,97 | 0,0155 | 0,0038 | 0,19 | 11,99 |
| 34,55 | 2,42 | 2,96 | 0,0169 | 0,0041 | 0,18 | 10,95 |
| 58,29 | 2,41 | 2,93 | 0,0246 | 0,0062 | 0,18 | 7,20 |
| 77,56 | 2,40 | 2,90 | 0,0319 | 0,0087 | 0,17 | 5,36 |
| 97,57 | 2,40 | 2,86 | 0,0406 | 0,0116 | 0,16 | 4,00 |

Bemerkung: bei 20°C ergibt sich intrapoliert näherungsweise: Δ_{εr⊥} = 0,56, tan δ_{ε r,⊥} = 0,014 und η = 15.

### Beispiel 3

Es wird eine Flüssigkristallmischung M-3 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 170,1 °C |
| Nr. | Abkürzung | | | |
| 1 | GGP-3-CL | 10,0 | nₑ (20°C, 589,3 nm) | = 1,5267 |
| 2 | GGP-5-CL | 20,0 | Δn (20°C, 589,3 nm) | = 0,2918 |
| 3 | PPTUI-3-2 | 20,0 | | |
| 4 | PPTUI-3-4 | 20,0 | ε_{∥} (20°C, 1 kHz) | = 7,8 |
| 5 | PPTUI-4-4 | 16,0 | Δε (20°C, 1 kHz) | = 4,4 |
| 6 | CPGP-5-2 | 7,0 | | |
| 7 | CPGP-5-3 | 7,0 | γ₁ (20°C) | = 698 mPa · s |
| ∑ | | 100,0 | | |

Diese Mischung eignet sich sehr gut für Anwendungen im Mikrowellenbereich, insbesondere für Phasenschieber.

### Beispiel 4

Es wird eine Flüssigkristallmischung M-4 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | | |
| Nr. | Abkürzung | | T(N,I) | = 183,5 °C |
| 1 | GGP-3-CL | 10,0 | | |
| 2 | GGP-5-CL | 19,0 | Δn (20°C, 589,3 nm) | = 0,283 |
| 3 | PPTUI-3-2 | 18,0 | | |
| 4 | PPTUI-3-4 | 18,0 | ε_{∥} (20°C, 1 kHz) | = 8,0 |
| 5 | PPTUI-4-4 | 10,0 | Δε (20°C, 1 kHz) | = 3,5 |
| 6 | PGIGP-3-5 | 6,00 | | |
| 7 | PPGU-3-F | 3,00 | γ₁ (20°C) | = 753 mPa · s |
| 8 | CPGP-5-2 | 8,0 | | |
| 9 | CPGP-5-3 | 8.0 | | |
| ∑ | | 100.0 | | |

Diese Mischung eignet sich sehr gut für Anwendungen im Mikrowellenbereich, insbesondere für Phasenschieber.

### Beispiel 5

Es wird eine Flüssigkristallmischung M-5 mit der Zusammensetzung und den Eigenschaften wie in der folgenden Tabelle angegeben hergestellt.

| Zusammensetzung | | | Physikalische Eigenschaften |
|---|---|---|---|
| Verbindung | | | |
| Nr. | Abkürzung | | |
| 1 | GGP-3-CL | 10,0 | |
| 2 | GGP-5-CL | 17,0 | |
| 3 | PPTUI-3-2 | 13,0 | |
| 4 | PPTUI-3-4 | 13,0 | |
| 5 | PPTUI-4-4 | 10,0 | |
| 6 | PPGU-3-F | 3,0 | |
| 7 | PPGU-4-F | 3,0 | |
| 8 | PPGU-V2-F | 3,0 | |
| 9 | PGIGP-3-5 | 7,0 | |
| 10 | PGIGP-5-5 | 7,0 | |
| 11 | CPGP-5-2 | 7,0 | |
| 12 | CPGP-5-3 | 7,0 | |
| ∑ | | 100,0 | |

Diese Mischung eignet sich sehr gut für Anwendungen im Mikrowellenbereich, insbesondere für Phasenschieber.

### Beispiel 6

Es wird eine Flüssigkristallmischung M-6 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 198,0 °C |
| Nr. | Abkürzung | | | |
| 1 | GGP-5-CL | 17,0 | ε_{∥} (20°C, 1 kHz) | = 7,7 |
| 2 | PPTUI-3-2 | 20,0 | Δε (20°C, 1 kHz) | = 3,5 |
| 3 | PPTUI-3-4 | 20,0 | | |
| 4 | PPTUI-4-4 | 10,0 | | |
| 5 | PPGU-3-F | 3,0 | | |
| 6 | PPGU-4-F | 3,0 | | |
| 7 | PPGU-V2-F | 3,0 | | |
| 8 | PGIGP-3-4 | 5,0 | | |
| 9 | PGIGP-3-5 | 5,0 | | |
| 10 | CPGP-5-2 | 7,0 | | |
| 11 | CPGP-5-3 | 7,0 | | |
| ∑ | | 100,0 | | |

Diese Mischung eignet sich sehr gut für Anwendungen im Mikrowellenbereich, insbesondere für Phasenschieber.

### Beispiel 7

Es wird eine Flüssigkristallmischung M-7 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 193,0 °C |
| Nr. | Abkürzung | | | |
| 1 | GGP-3-CL | 10,0 | ε_{∥} (20°C, 1 kHz) | = 8,7 |
| 2 | GGP-5-CL | 20,0 | Δε (20°C, 1 kHz) | = 3,5 |
| 3 | PPTUI-3-2 | 15,0 | | |
| 4 | PPTUI-3-4 | 20,0 | | |
| 5 | PPGU-3-F | 3,0 | | |
| 6 | PPGU-4-F | 3,0 | | |
| 7 | PPGU-V2-F | 3,0 | | |
| 8 | PGIGP-3-4 | 5,0 | | |
| 9 | PGIGP-3-5 | 5,0 | | |
| 10 | CPGP-5-2 | 8,0 | | |
| 11 | CPGP-5-3 | 8,0 | | |
| ∑ | | 100,0 | | |

Diese Mischung eignet sich sehr gut für Anwendungen im Mikrowellenbereich, insbesondere für Phasenschieber.

### Beispiel 8

Es wird eine Flüssigkristallmischung M-8 mit der Zusammensetzung und den Eigenschaften wie in der folgenden Tabelle angegeben hergestellt.

| Zusammensetzung | | | Physikalische Eigenschaften |
|---|---|---|---|
| Verbindung | | | |
| Nr. | Abkürzung | | |
| 1 | GGP-3-CL | 10,0 | |
| 2 | GGP-5-CL | 19,0 | |
| 3 | PPTUI-3-2 | 18,0 | |
| 4 | PPTUI-3-4 | 18,0 | |
| 5 | PPTUI-4-4 | 10,0 | |
| 6 | PPGU-3-F | 2,0 | |
| 7 | PPGU-4-F | 2,0 | |
| 8 | PPGU-V2-F | 2,0 | |
| 9 | PGIGP-3-5 | 5,0 | |
| 10 | CPGP-5-2 | 7,0 | |
| 11 | CPGP-5-3 | 7,0 | |
| ∑ | | 100,0 | |

Diese Mischung eignet sich sehr gut für Anwendungen im Mikrowellenbereich, insbesondere für Phasenschieber.

### Beispiel 9

Es wird eine Flüssigkristallmischung M-9 mit der Zusammensetzung und den Eigenschaften wie in der folgenden Tabelle angegeben hergestellt.

| Zusammensetzung | | | Physikalische Eigenschaften |
|---|---|---|---|
| Verbindung | | | |
| Nr. | Abkürzung | | |
| 1 | PGP-2-5 | 10,0 | |
| 2 | PGP-3-4 | 10,0 | |
| 3 | PGP-3-7 | 15,0 | |
| 4 | PGP-2-2V | 5,0 | |
| 5 | PYP-2-2V | 10,0 | |
| 6 | PYP-2-4 | 10,0 | |
| 7 | PYP-2-5 | 20,0 | |
| 8 | PYP-3-5 | 15,0 | |
| 9 | PGIGP-3-5 | 5,0 | |
| ∑ | | 100,0 | |

Diese Mischung eignet sich sehr gut für Anwendungen im Mikrowellenbereich, insbesondere für Phasenschieber.

### Beispiel 10

Es wird eine Flüssigkristallmischung M-10 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 134,5 °C |
| Nr. | Abkürzung | | | |
| 1 | GGP-3-F | 10,0 | nₑ (20°C, 589,3 nm) | = 1,8036 |
| 2 | GGP-5-F | 10,0 | Δn (20°C, 589,3 nm) | = 0,2774 |
| 3 | GGP-3-CL | 10,0 | | |
| 4 | GGP-4-CL | 20,0 | ε_{∥} (20°C, 1 kHz) | = 15,2 |
| 5 | GGP-5-CL | 20,0 | Δε (20°C, 1 kHz) | = 10,2 |
| 6 | GGP-6-CL | 10,0 | | |
| 7 | GGPP-5-3 | 5,0 | γ₁ (20°C) | = 758 mPa · s |
| 8 | PGGP-3-5 | 5,0 | | |
| 9 | PGGP-3-6 | 5,0 | | |
| 10 | PGGP-5-3 | 5,0 | | |
| ∑ | | 100,0 | | |

Diese Mischung eignet sich sehr gut für Anwendungen im Mikrowellenbereich, insbesondere für Phasenschieber.

### Beispiel 11

Es wird eine Flüssigkristallmischung M-11 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | | |
| Nr. | Abkürzung | | | |
| 1 | GGP-3-F | 5,0 | nₑ (20°C, 589,3 nm) | = 1,7885 |
| 2 | GGP-3-CL | 10,0 | Δn (20°C, 589,3 nm) | = 0,2640 |
| 3 | GGP-4-CL | 10,0 | | |
| 4 | GGP-5-CL | 15,0 | ε_{∥} (20°C, 1 kHz) | = 8,8 |
| 5 | GGP-5-3 | 20,0 | Δε (20°C, 1 kHz) | = 4,7 |
| 6 | PGP-2-5 | 10,0 | | |
| 7 | PGP-3-7 | 15,0 | γ₁ (20°C) | = 660 mPa · s |
| 8 | PGP-2-2V | 10,0 | | |
| 9 | PGGP-3-5 | 5,0 | | |
| ∑ | | 100,0 | | |

Diese Mischung eignet sich sehr gut für Anwendungen im Mikrowellenbereich, insbesondere für Phasenschieber.

### Beispiel 12

Es wird eine Flüssigkristallmischung M-12 mit der Zusammensetzung und den Eigenschaften wie in der folgenden Tabelle angegeben hergestellt.

| Zusammensetzung | | | Physikalische Fiqenschaften | |
|---|---|---|---|---|
| Verbindung | | | T(N,I) | = 124,5 °C |
| Nr. | Abkürzung | | | |
| 1 | GGP-3-CL | 10,0 | nₑ (20°C, 589,3 nm) | = 1,7951 |
| 2 | GGP-4-CL | 20,0 | Δn (20°C, 589,3 nm) | = 0,2709 |
| 3 | GGP-5-CL | 20,0 | | |
| 4 | GGP-6-CL | 10,0 | ε_{∥} (20°C, 1 kHz) | = 11,6 |
| 5 | GGP-5-3 | 25,0 | Δε (20°C, 1 kHz) | = 6,8 |
| 6 | PGGP-3-5 | 5,0 | | |
| 7 | PGGP-3-6 | 5,0 | γ₁ (20°C) | = 895 mPa · s |
| 8 | PGGP-5-3 | 5,0 | | |
| ∑ | | 100,0 | | |

Diese Mischung eignet sich sehr gut für Anwendungen im Mikrowellenbereich, insbesondere für Phasenschieber.

### Beispiel 13

Es wird eine Flüssigkristallmischung M-13 mit der Zusammensetzung und den Eigenschaften wie in der folgenden Tabelle angegeben hergestellt.

| Zusammensetzung | | | Physikalische Eigenschaften | |
|---|---|---|---|---|
| Verbidung | | | T(N,I) | = 184,5 °C |
| Nr. | Abkürzung | | | |
| 1 | GGP-3-CL | 5,0 | | |
| 2 | GGP-5-CL | 19,0 | | |
| 3 | PGU-7-F | 2,0 | | |
| 4 | PPTUI-3-2 | 18,0 | | |
| 5 | PPTUI-3-4 | 18,0 | | |
| 6 | PPTUI-4-4 | 10,0 | | |
| 7 | PPGU-7-F | 2,0 | | |
| 8 | PGIGP-3-5 | 6,0 | | |
| 9 | DPGU-3-F | 2,0 | | |
| 10 | DPGU-3-OT | 2,0 | | |
| 11 | CPGP-5-2 | 8,0 | | |
| 12 | CPGP-5-3 | 8,0 | | |
| ∑ | | 100,0 | | |

Diese Mischung eignet sich sehr gut für Anwendungen im Mikrowellenbereich, insbesondere für Phasenschieber.

**Tabelle 4: Eigenschaften der Mischung M-13 bei 30 GHz**

| T/°C | ε_{r,⊥} | ε_{r,∥} | tan δ_{ε r,⊥} | tan δ_{ε r,∥} | τ_{ε r} | η |
|---|---|---|---|---|---|---|
| 9,47 | 2,51 | 2,92 | 0,0094 | 0,0035 | 0,140 | 15,0 |
| 19,67 | 2,51 | 2,92 | 0,0115 | 0,0041 | 0,139 | 12,1 |
| 30,07 | 2,49 | 2,94 | 0,0135 | 0,0046 | 0,152 | 11,2 |
| 40,52 | 2,44 | 2,96 | 0,0169 | 0,0046 | 0,175 | 10,3 |
| 50,17 | 2,36 | 2,96 | 0,0214 | 0,0050 | 0,204 | 9,48 |
| 59,99 | 2,34 | 2,94 | 0,0246 | 0,0056 | 0,204 | 8,24 |
| 70,41 | 2,34 | 2,93 | 0,0276 | 0,0061 | 0,199 | 7,22 |
| 79,74 | 2,35 | 2,91 | 0,0291 | 0,0067 | 0,195 | 6,69 |
| 84,52 | 2,35 | 2,91 | 0,0295 | 0,0071 | 0,192 | 6,51 |

Bemerkung: bei 20°C ergibt sich intrapoliert näherungsweise: Δε_{r⊥} = 2,51, tan δ_{ε r,⊥} = 0,0115, τ_{ε r} = 0,140 und η = 14,5.

### Beispiel 14

Es wird eine Flüssigkristallmischung M-14 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 175,5 °C |
| Nr. | Abkürzung | | | |
| 1 | GGP-5-CL | 20,0 | | |
| 2 | PGU-3-CL | 2,0 | | |
| 3 | PGU-4-OT | 2,0 | | |
| 4 | PGP-F-OT | 3,0 | | |
| 5 | PPTUI-3-2 | 13,0 | | |
| 6 | PPTUI-3-4 | 15,0 | | |
| 7 | PPTUI-4-4 | 20,0 | | |
| 8 | PPGU-7-F | 2,0 | | |
| 9 | PGIGP-3-5 | 6,0 | | |
| 10 | CPTP-3-2 | 3,0 | | |
| 11 | DPGU-3-F | 2,0 | | |
| 12 | DPGU-3-OT | 2,0 | | |
| 13 | CPGP-5-2 | 4,0 | | |
| 14 | CPGP-5-3 | 6,0 | | |
| ∑ | | 100,0 | | |

Diese Mischung eignet sich sehr gut für Anwendungen im Mikrowellenbereich, insbesondere für Phasenschieber.

### Beispiel 15

Es wird eine Flüssigkristallmischung M-15 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 178 °C |
| Nr. | Abkürzung | | | |
| 1 | GGP-5-CL | 10,0 | | |
| 2 | GGP-6-CL | 5,0 | | |
| 3 | PGP-3-2V | 3,0 | | |
| 4 | PGP-2-2V | 3,0 | | |
| 5 | PPTUI-3-2 | 15,0 | | |
| 6 | PPTUI-3-4 | 18,0 | | |
| 7 | PPTUI-4-4 | 21,0 | | |
| 8 | PPGU-7-F | 2,0 | | |
| 9 | PPGU-V2-F | 2,0 | | |
| 10 | PGIGP-3-5 | 7,0 | | |
| 11 | CPTP-3-2 | 4,0 | | |
| 12 | CPGU-3-OT | 2,0 | | |
| 13 | CPGU-4-OT | 2,0 | | |
| 14 | DPGU-3-OT | 2,0 | | |
| 15 | CPGP-5-2 | 4,0 | | |
| ∑ | | 100,0 | | |

Diese Mischung eignet sich sehr gut für Anwendungen im Mikrowellenbereich, insbesondere für Phasenschieber.

### Beispiel 16

Es wird eine Flüssigkristallmischung M-16 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 159,5 °C |
| Nr. | Abkürzung | | | |
| 1 | GGP-5-CL | 20,0 | ε_{∥} (20°C, 1 kHz) | = 7,9 |
| 2 | GGP-5-3 | 12,0 | Δε (20°C, 1 kHz) | = 4,3 |
| 3 | PPTUI-3-2 | 12,0 | | |
| 4 | PPTUI-3-4 | 16,0 | γ₁ (20°C) | = 686 mPa · s |
| 5 | PPTUI-4-4 | 20,0 | | |
| 6 | PGUQU-5-F | 5,0 | | |
| 7 | PGGP-3-5 | 5,0 | | |
| 8 | PGGP-3-6 | 4,0 | | |
| 9 | APGP-3-3 | 3,0 | | |
| 10 | APGP-3-4 | 3,0 | | |
| ∑ | | 100,0 | | |

Diese Mischung eignet sich sehr gut für Anwendungen im Mikrowellenbereich, insbesondere für Phasenschieber.

### Beispiel 17

Es wird eine Flüssigkristallmischung M-17 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 169 °C |
| Nr. | Abkürzung | | | |
| 1 | GGP-5-3 | 10,0 | | |
| 2 | PPTUI-3-F | 8,0 | | |
| 3 | PPTUI-4-F | 8,0 | | |
| 4 | PPTUI-3-2 | 12,0 | | |
| 5 | PPTUI-3-4 | 16,0 | | |
| 6 | PPTUI-4-4 | 20,0 | | |
| 7 | PPTUI-3-A4 | 5,0 | | |
| 8 | PGUQU-5-F | 7.0 | | |
| 9 | PGGP-3-5 | 4,0 | | |
| 10 | PGGP-3-6 | 4,0 | | |
| 11 | APGP-3-3 | 3,0 | | |
| 12 | APGP-3-4 | 3,0 | | |
| ∑ | | 100,0 | | |

Diese Mischung eignet sich sehr gut für Anwendungen im Mikrowellenbereich, insbesondere für Phasenschieber.

## Patentansprüche

1. Flüssigkristallmedium, **dadurch gekennzeichnet, dass** es
- mindestens eine Verbindung der Formel I und
- mindestens eine Verbindung der Formel II
oder
- mindestens eine Verbindung der Formel I und
- mindestens eine Verbindung der Formel III
oder
- mindestens eine Verbindung der Formel II und
- mindestens eine Verbindung der Formel III
oder
- mindestens eine Verbindung der Formel I und
- mindestens eine Verbindung der Formel II und
- mindestens eine Verbindung der Formel III
enthält: 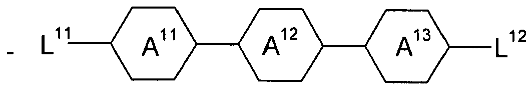 worin
L¹¹ R¹¹ oder X¹¹,
L¹² R¹² oder X¹²,
R¹¹ und R¹² unabhängig voneinander H, unfluoriertes Alkyl oder unfluoriertes Alkoxy mit 1 bis 15 C-Atomen oder unfluoriertes Alkenyl, unfluoriertes Alkenyloxy oder unfluoriertes Alkoxyalkyl mit 2 bis 15 C-Atomen bedeuten,
X¹¹ und X¹² unabhängig voneinander H, F, Cl, -CN, -NCS, -SF₅, fluoriertes Alkyl oder fluoriertes Alkoxy mit 1 bis 7 C-Atomen oder fluoriertes Alkenyl, unfluoriertes Alkenyloxy oder unfluoriertes oder Alkoxyalkyl mit 2 bis 7 C-Atomen, und 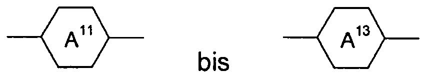 unabhängig voneinander 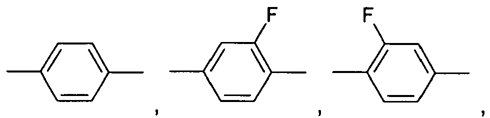 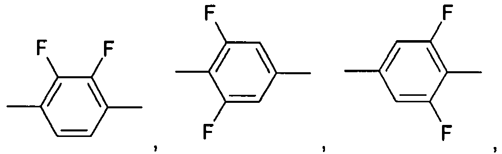 oder 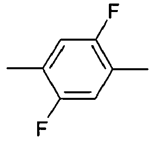 bedeuten, 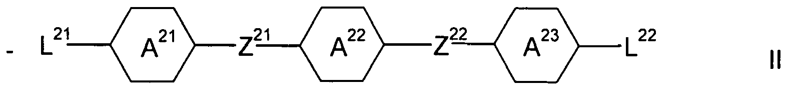 worin
L²¹ R²¹ und, im Fall, dass Z²¹ und/oder Z²² *trans-* -CH=CH- oder *trans-* -CF=CF-, bedeutet, alternativ X²¹, bedeutet,
L²² R²² und, im Fall, dass Z²¹ und/oder Z²² *trans-* -CH=CH- oder *trans-* -CF=CF-, bedeutet, alternativ X²², bedeutet,
R²¹ und R²² unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes oder fluoriertes Alkenyloxy oder unfluoriertes oder fluoriertes Alkoxyalkyl mit 2 bis 15, bevorzugt 3 bis 10, C-Atomen, bedeuten,
X²¹ und X²² unabhängig voneinander F oder Cl, -CN, -NCS, -SF₅, fluoriertes Alkyl oder fluoriertes Alkoxy mit 1 bis 7 C-Atomen oder fluoriertes Alkenyl, fluoriertes Alkenyloxy oder fluoriertes Alkoxyalkyl mit 2 bis 7 C-Atomen bedeuten,
einer von Z²¹ und Z²² *trans-* -CH=CH-, *trans-* -CF=CF- oder -C=C- bedeutet und der andere unabhängig davon *trans-* -CH=CH-, *trans-* -CF=CF- oder eine Einfachbindung bedeutet, und 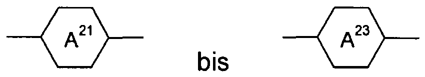 unabhängig voneinander 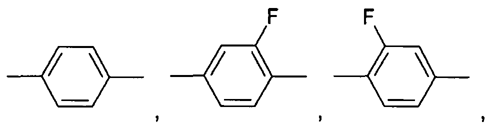 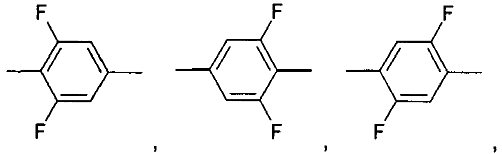 oder 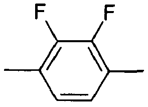 bedeuten, 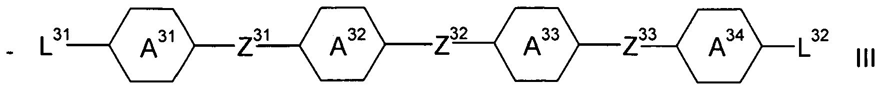 worin
L³¹ R³¹ oder X³¹,
L³² R³² oder X³²,
R³¹ und R³² unabhängig voneinander H, unfluoriertes Alkyl oder unfluoriertes Alkoxy mit 1 bis 17 C-Atomen oder unfluoriertes Alkenyl, unfluoriertes Alkenyloxy oder unfluoriertes Alkoxyalkyl mit 2 bis 15 C-Atomen, bedeuten,
X³¹ und X³² unabhängig voneinander H, F, Cl, -CN, -NCS, -SF₅, fluoriertes Alkyl oder fluoriertes Alkoxy mit 1 bis 7 C-Atomen oder fluoriertes Alkenyl, unfluoriertes oder fluoriertes Alkenyloxy oder unfluoriertes oder fluoriertes Alkoxyalkyl mit 2 bis 7 C-Atomen,
Z³¹ bis Z³³ unabhängig voneinander *trans-* -CH=CH-, *trans-*-CF=CF-, -C=C- oder eine Einfachbindung bedeuten, und 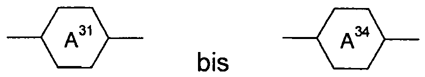 unabhängig voneinander 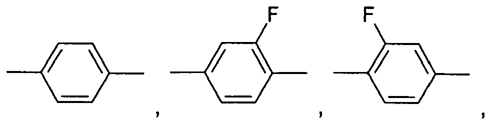 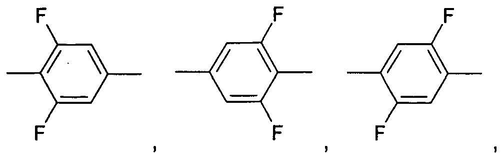 oder 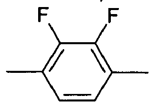 bedeuten,
und, dass es
- 60 % oder mehr der in diesem Anspruch angegebenen Verbindungen enthält. 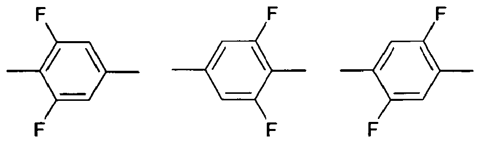 oder 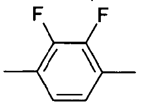 bedeuten,

2. Flüssigkristallmedium nach Anspruch 1, **dadurch gekennzeichnet, dass** es eine oder mehrere Verbindungen der Formel I, wie in Anspruch 1 angegeben, enthält.

3. Flüssigkristallmedium nach Anspruch 1 oder 2, **dadurch gekennzeichnet, dass** es eine oder mehrere Verbindungen der Formel II, wie in Anspruch 1 angegeben, enthält.

4. Flüssigkristallmedium nach einem oder mehreren der Ansprüche 1 bis 3, **dadurch gekennzeichnet, dass** es eine oder mehrere Verbindungen der Formel III, wie in Anspruch 1 angegeben, enthält.

5. Flüssigkristallmedium nach einem oder mehreren der Ansprüche 2 bis 4, **dadurch gekennzeichnet, dass** die Konzentration der Verbindungen der Formel I im Medium im Bereich von insgesamt 15 % bis 70 % liegt.

6. Flüssigkristallmedium nach einem oder mehreren der Ansprüche 3 bis 5, **dadurch gekennzeichnet, dass** die Konzentration der Verbindungen der Formel II im Medium im Bereich von insgesamt 1 % bis 60 % liegt.

7. Flüssigkristallmedium nach einem oder mehreren der Ansprüche 2 bis 6, **dadurch gekennzeichnet, dass** es eine oder mehrere Verbindungen ausgewählt aus der Gruppe der Verbindungen der Formeln I-1 bis I-3 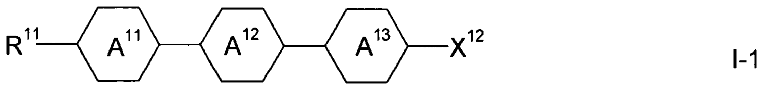 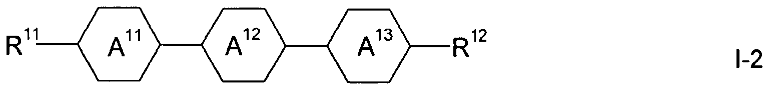 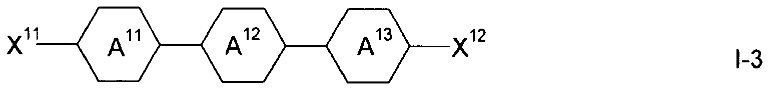 worin die Parameter die jeweiligen in Anspruch 1 gegebenen Bedeutungen haben,
enthält.

8. Bauteil für die Hochfrequenztechnik, **dadurch gekennzeichnet, dass** sie ein Flüssigkristallmedium nach einem oder mehreren der Ansprüche 1 bis 7 enthält.

9. Bauteil nach Anspruch 8, **dadurch gekennzeichnet, dass** es zum Betrieb im Mikrowellenbereich geeignet ist.

10. Bauteil nach Anspruch 8 oder 9, **dadurch gekennzeichnet, dass** es sich um einen Phasenschieber handelt.

11. Verwendung eines Flüssigkristallmediums nach einem oder mehreren der Ansprüche 1 bis 7 in einem Bauteil für die Hochfrequenztechnik.

12. Verfahren zur Herstellung eines Flüssigkristallmediums, **dadurch gekennzeichnet, dass** eine oder mehrere Verbindungen der Formel I, wie in Anspruch 1 angegeben, mit einer oder mehreren Verbindungen ausgewählt aus der Gruppe der Verbindungen der Formeln II und/oder III, wie in Anspruch 1 angegeben und gegebenenfalls mit einer oder mehreren weiteren Verbindungen und/oder mit einem oder mehreren Additiven gemischt werden.

13. Mikrowellenantennenarray, **dadurch gekennzeichnet**, das es ein oder mehrere Bauteile nach einem oder mehreren der Ansprüche 7 bis 9 enthält.

## Claims

1. Liquid-crystal medium, **characterised in that** it comprises
- at least one compound of the formula I and
- at least one compound of the formula II
or
- at least one compound of the formula I and
- at least one compound of the formula III
or
- at least one compound of the formula II and
- at least one compound of the formula III
or
- at least one compound of the formula I and
- at least one compound of the formula II and
- at least one compound of the formula III: 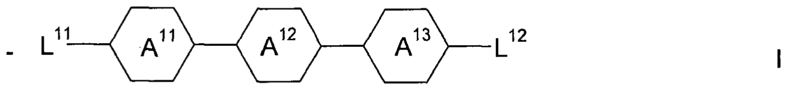 in which
L¹¹ denotes R¹¹ or X¹¹,
L¹² denotes R¹² or X¹²,
R¹¹ and R¹², independently of one another, denote H, unfluorinated alkyl or unfluorinated alkoxy having 1 to 15 C atoms or unfluorinated alkenyl, unfluorinated alkenyloxy or unfluorinated alkoxyalkyl having 2 to 15 C atoms,
X¹¹ and X¹², independently of one another, denote H, F, Cl, -CN, -NCS, -SF₅, fluorinated alkyl or fluorinated alkoxy having 1 to 7 C atoms or fluorinated alkenyl, unfluorinated alkenyloxy or unfluorinated or fluorinated alkoxyalkyl having 2 to 7 C atoms, and 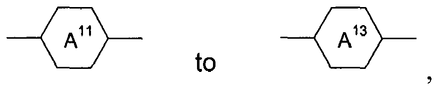 independently of one another, denote 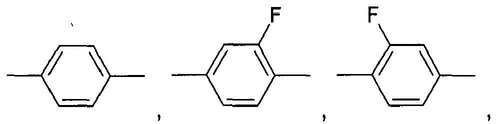 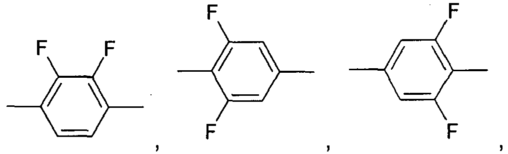 or 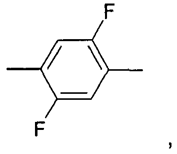 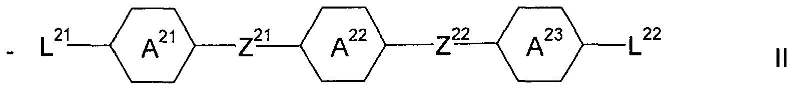 in which
L²¹ denotes R²¹ and, in the case where Z²¹ and/or Z²² denote *trans*-CH=CH- or *trans*-CF=CF-, alternatively denotes X²¹,
L²² denotes R²² and, in the case where Z²¹ and/or Z²² denote *trans*-CH=CH- or *trans*-CF=CF-, alternatively denotes X²²,
R²¹ and R²², independently of one another, denote H, unfluorinated alkyl or unfluorinated alkoxy having 1 to 17, preferably having 3 to 10, C atoms or unfluorinated alkenyl, unfluorinated or fluorinated alkenyloxy or unfluorinated or fluorinated alkoxyalkyl having 2 to 15, preferably 3 to 10, C atoms,
X²¹ and X²², independently of one another, denote F or Cl, -CN, -NCS, -SF₅, fluorinated alkyl or fluorinated alkoxy having 1 to 7 C atoms or fluorinated alkenyl, fluorinated alkenyloxy or fluorinated alkoxyalkyl having 2 to 7 C atoms,
one of Z²¹ and Z²² denotes *trans*-CH=CH-, *trans*-CF=CF- or -C=C- and the other, independently thereof, denotes *trans-*CH=CH-, *trans*-CF=CF- or a single bond, and 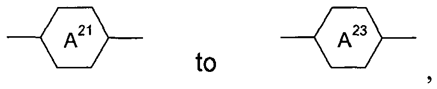 independently of one another, denote 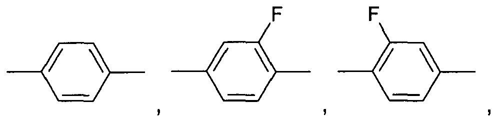 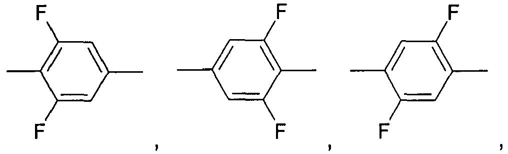 or 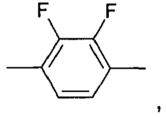 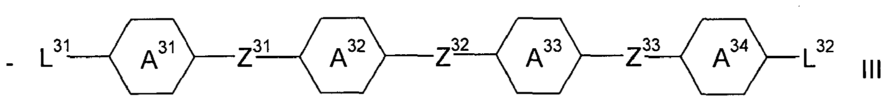 in which
L³¹ denotes R³¹ or X³¹,
L³² denotes R³² or X³²,
R³¹ and R³², independently of one another, denote H, unfluorinated alkyl or unfluorinated alkoxy having 1 to 17 C atoms or unfluorinated alkenyl, unfluorinated alkenyloxy or unfluorinated alkoxyalkyl having 2 to 15 C atoms,
X³¹ and X³², independently of one another, denote H, F, Cl, -CN, -NCS, -SF₅, fluorinated alkyl or fluorinated alkoxy having 1 to 7 C atoms or fluorinated alkenyl, unfluorinated or fluorinated alkenyloxy or unfluorinated or fluorinated alkoxyalkyl having 2 to 7 C atoms,
Z³¹ to Z³³, independently of one another, denote *trans*-CH=CH-, *trans*-CF=CF-, -C=C- or a single bond, and 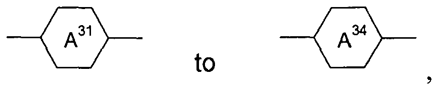 independently of one another, denote 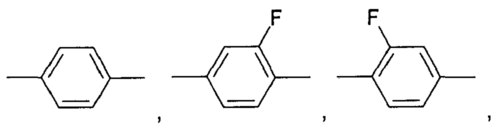 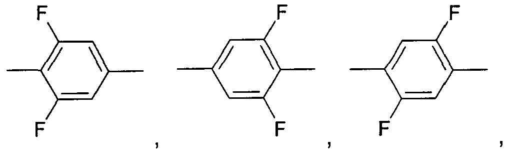 or 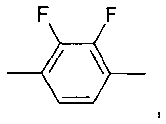
and **in that** it comprises
- 60% or more of the compounds indicated in this claim.

2. Liquid-crystal medium according to Claim 1, **characterised in that** it comprises one or more compounds of the formula I, as indicated in Claim 1.

3. Liquid-crystal medium according to Claim 1 or 2, **characterised in that** it comprises one or more compounds of the formula II, as indicated in Claim 1.

4. Liquid-crystal medium according to one or more of Claims 1 to 3, **characterised in that** it comprises one or more compounds of the formula III, as indicated in Claim 1.

5. Liquid-crystal medium according to one or more of Claims 2 to 4, **characterised in that** the concentration of the compounds of the formula I in the medium is in the range from in total 15% to 70%.

6. Liquid-crystal medium according to one or more of Claims 3 to 5, **characterised in that** the concentration of the compounds of the formula II in the medium is in the range from in total 1% to 60%.

7. Liquid-crystal medium according to one or more of Claims 2 to 6, **characterised in that** it comprises one or more compounds selected from the group of the compounds of the formulae I-1 to I-3: 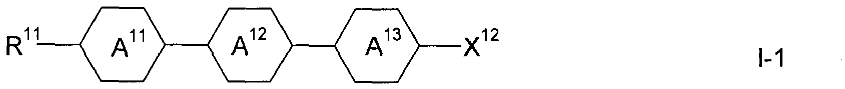 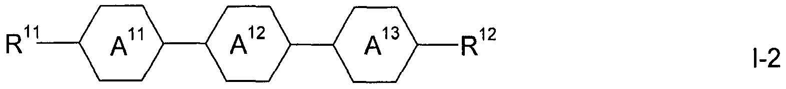 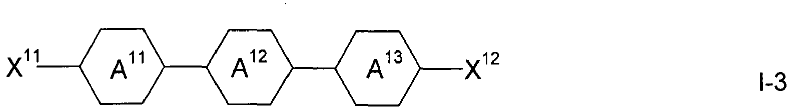 in which the parameters have the respective meanings given in Claim 1.

8. Component for high-frequency technology, **characterised in that** it contains a liquid crystal medium according to one or more of Claims 1 to 7.

9. Component according to Claim 8, **characterised in that** it is suitable for operation in the microwave range.

10. Component according to Claim 8 or 9, **characterised in that** it is a phase shifter.

11. Use of a liquid-crystal medium according to one or more of Claims 1 to 7 in a component for high-frequency technology.

12. Process for the preparation of a liquid-crystal medium, **characterised in that** one or more compounds of the formula I, as indicated in Claim 1, are mixed with one or more compounds selected from the group of the compounds of the formulae II and/or III, as indicated in Claim 1, and optionally with one or more further compounds and/or with one or more additives.

13. Microwave antenna array, **characterised in that** it comprises one or more components according to one or more of Claims 7 to 9.

## Revendications

1. Milieu cristallin liquide, **caractérisé en ce qu'**il comprend :
- au moins un composé de la formule I et
- au moins un composé de la formule II
ou
- au moins un composé de la formule I et
- au moins un composé de la formule III
ou
- au moins un composé de la formule II et
- au moins un composé de la formule III
ou
- au moins un composé de la formule I et
- au moins un composé de la formule II et
- au moins un composé de la formule IIII : 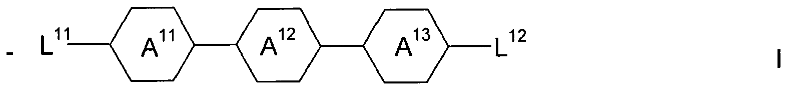 dans laquelle :
L¹¹ représente R¹¹ ou X¹¹,
L¹² représente R¹² ou X¹²,
R¹¹ et R¹² représentent, indépendamment l'un de l'autre, H, alkyle non fluoré ou alcoxy non fluoré comportant de 1 à 15 atomes de C ou alkényle non fluoré, alkényloxy non fluoré ou alcoxyalkyle non fluoré comportant de 2 à 15 atomes de C,
X¹¹ et X¹² représentent, indépendamment l'un de l'autre, H, F, Cl, -CN, -NCS, -SF₅, alkyle fluoré ou alcoxy fluoré comportant de 1 à 7 atomes de C ou alkényle fluoré, alkényloxy non fluoré ou alcoxyalkyle non fluoré ou fluoré comportant de 2 à 7 atomes de C, et 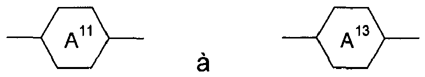 représentent, indépendamment les uns des autres 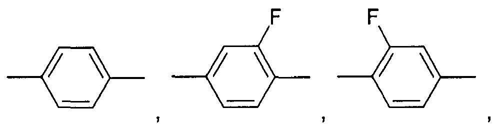 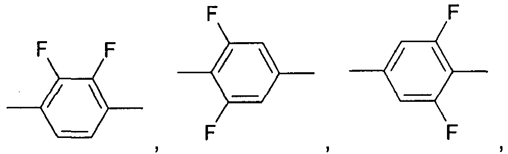 ou 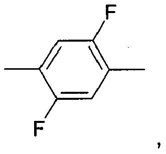 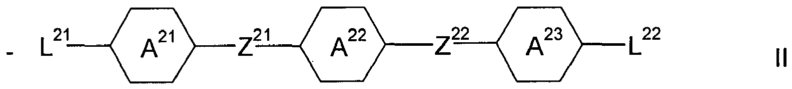 où
L²¹ représente R²¹ et, dans le cas où Z²¹ et/ou Z²² représente(nt) trans-CH=CH- ou *trans*-CF=CF-, représente à titre d'alternative X²¹,
3L²² représente R²² et, dans le cas où Z²¹ et/ou Z²² représente(nt) trans-CH=CH- ou trans-CF=CF-, représente à titre d'alternative X²²,
R²¹ et R²² représentent, indépendamment l'un de l'autre, H, alkyle non fluoré ou alcoxy non fluoré comportant de 1 à 17, de façon préférable comportant de 3 à 10 atomes de C ou alkényle non fluoré, alkényloxy non fluoré ou fluoré ou alcoxyalkyle non fluoré ou fluoré comportant de 2 à 15, de façon préférable de 3 à 10 atomes de C,
X²¹ et X²² représentent, indépendamment l'un de l'autre, F ou CI, -CN, -NCS, -SF₅, alkyle fluoré ou alcoxy fluoré comportant de 1 à 7 atomes de C ou alkényle fluoré, alkényloxy fluoré ou alcoxyalkyle fluoré comportant de 2 à 7 atomes de C,
l'un de Z²¹ et Z²² représente *trans*-CH=CH-, trans-CF=CF- ou -C=C- et l'autre, indépendamment de celui-ci, représente *trans-*CH=CH-, trans-CF=CF- ou une liaison simple, et 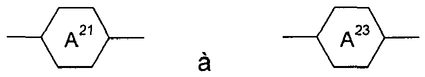 représentent, indépendamment les uns des autres, 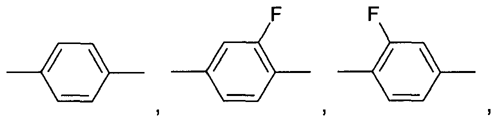 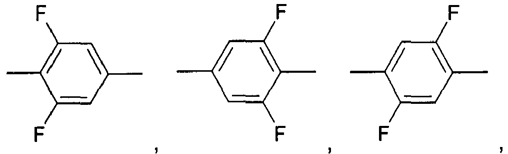 ou 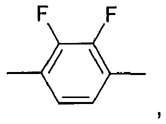 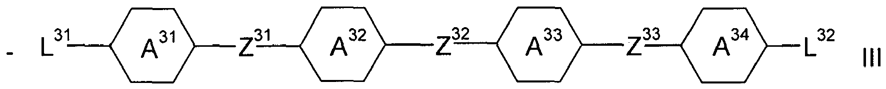 où
L³¹ représente R³¹ ou X³¹,
L³² représente R³² ou X³²,
R³¹ et R³² représentent, indépendamment l'un de l'autre, H, alkyle non fluoré ou alcoxy non fluoré comportant de 1 à 17 atomes de C ou alkényle non fluoré, alkényloxy non fluoré ou alcoxyalkyle non fluoré comportant de 2 à 15 atomes de C,
X³¹ et X³² représentent, indépendamment l'un de l'autre, H, F, Cl, -CN, -NCS, -SF₅, alkyle fluoré ou alcoxy fluoré comportant de 1 à 7 atomes de C ou alkényle fluoré, alkényloxy non fluoré ou fluoré ou alcoxyalkyle non fluoré ou fluoré comportant de 2 à 7 atomes de C,
Z³¹ à Z³³ représentent, indépendamment les uns des autres, *trans*-CH=CH-, *trans* -CF=CF-, -C=C- ou une liaison simple, et 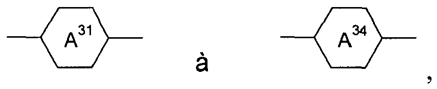 représentent, indépendamment les uns des autres 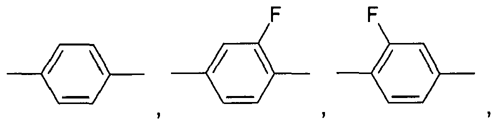 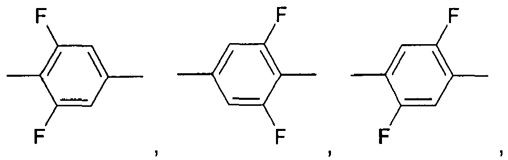 ou 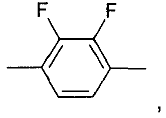
et **en ce qu'**il comprend
- 60% ou plus des composés indiqués dans cette revendication.

2. Milieu cristallin liquide selon la revendication 1, **caractérisé en ce qu'**il comprend un ou plusieurs composé(s) de la formule I, comme indiqué selon la revendication 1.

3. Milieu cristallin liquide selon la revendication 1 ou 2, **caractérisé en ce qu'**il comprend un ou plusieurs composé(s) de la formula II, comme indiqué selon la revendication 1.

4. Milieu cristallin liquide selon une ou plusieurs des revendications 1 à 3, **caractérisé en ce qu'**il comprend un ou plusieurs composé(s) de la formule III, comme indiqué selon la revendication 1.

5. Milieu cristallin liquide selon une ou plusieurs des revendications 2 à 4, **caractérisé en ce que** la concentration des composés de la formule I dans le milieu est dans la plage qui va de 15% à 70% au total.

6. Milieu cristallin liquide selon une ou plusieurs des revendications 3 à 5, **caractérisé en ce que** la concentration des composés de la formule Il dans le milieu est dans la plage qui va de 1% à 60% au total.

7. Milieu cristallin liquide selon une ou plusieurs des revendications 2 à 6, **caractérisé en ce qu'**il comprend un ou plusieurs composé(s) choisi(s) parmi le groupe des composés des formules I-1 à I-3 : 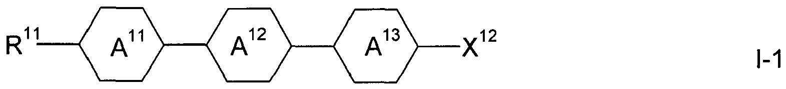 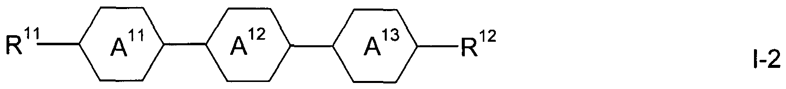 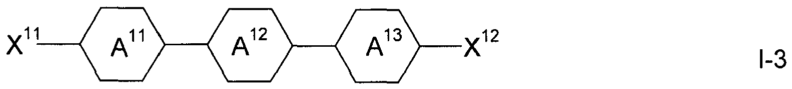 dans lesquelles les paramètres présentent les significations respectives données selon la revendication 1.

8. Composant pour la technologie des hautes fréquences, **caractérisé en ce qu'**il contient un milieu cristallin liquide selon une ou plusieurs des revendications 1 à 7.

9. Composant selon la revendication 8, **caractérisé en ce qu'**il convient pour un fonctionnement dans la plage des micro-ondes.

10. Composant selon la revendication 8 ou 9, **caractérisé en ce qu'**il s'agit d'un déphaseur.

11. Utilisation d'un milieu cristallin liquide selon une ou plusieurs des revendications 1 à 7 dans un composant pour la technologie des hautes fréquences.

12. Procédé pour la préparation d'un milieu cristallin liquide, **caractérisé en ce qu'**un ou plusieurs compose(s) de la formule I, comme indiqué selon la revendication 1, est/sont mélangé(s) avec un ou plusieurs composé(s) choisi(s) parmi le groupe des composés des formules II et/ou III, comme indiqué selon la revendication 1, et en option, avec un ou plusieurs autre(s) composé(s) et/ou avec un ou plusieurs additif(s).

13. Antenne réseau micro-ondes, **caractérisée en ce qu'**elle comprend un ou plusieurs composant(s) selon une ou plusieurs des revendications 7 à 9.
